# EUROPEAN PATENT APPLICATION

(11) **EP 4 220 394 A1**
(43) Date of publication of application: **02.08.2023**
(21) Application number: 21879418.8
(22) Date of filing: 13.10.2021
(51) Int. Cl.: G06F 9/455

(54) **CHIP SYSTEM, METHOD FOR PROCESSING VIRTUAL INTERRUPT, AND CORRESPONDING DEVICE**

(30) Priority: 15.10.2020 CN 202011108332
(71) Applicant: Huawei Technologies Co., Ltd., Shenzhen, Guangdong 518129 (CN)
(72) Inventor: ZHAO, Siqi, Shenzhen, Guangdong 518129 (CN); JIANG, Yifei, Shenzhen, Guangdong 518129 (CN); DENG, Kai, Shenzhen, Guangdong 518129 (CN)
(74) Representative: Thun, Clemens
(86) International application number: PCT/CN2021/123497
(87) International publication number: WO 2022/078375

(57) **Abstract**

A chip system is provided, and is applied to the field of virtualization technologies. The chip system includes a source physical processor, a control apparatus, an intermediate apparatus, a sending apparatus, and a target physical processor. A host machine or a virtual machine runs on the source physical processor. A register in the control apparatus receives information that is written by the host machine or the virtual machine and used to trigger a virtual interrupt. The control apparatus sends the information that is in the register and used to trigger the virtual interrupt to the intermediate apparatus. The intermediate apparatus triggers the virtual interrupt based on the information used to trigger the virtual interrupt, and sends the virtual interrupt to the sending apparatus. The sending apparatus sends the virtual interrupt to the target physical processor. This solution is used to reduce overheads of switching from the virtual machine to the host machine or from a user mode of the host machine to a kernel mode of the host machine that are generated due to the virtual interrupt.

## Description

This application claims priority to Chinese Patent Application No. 202011108332.3, filed with the China National Intellectual Property Administration on October 15, 2020 and entitled "CHIP SYSTEM, VIRTUAL INTERRUPT PROCESSING METHOD, AND CORRESPONDING APPARATUS", which is incorporated herein by reference in its entirety.

### TECHNICAL FIELD

This application relates to the field of virtualization technologies, and specifically to a chip system, a virtual interrupt processing method, and a corresponding apparatus.

### BACKGROUND

A virtual interrupt is a necessary part of a virtualization technology. A virtual machine (virtual machine, VM) runs on a computer device. A notification sent by a hardware device such as a disk or an input/output (input/output, I/O) device in the computer device to the virtual machine and various types of synchronization and coordination inside the virtual machine depend on the virtual interrupt. The virtual interrupt is an event. Such event may have various sources, and a processing process for the event varies based on the sources. However, such event from each source is notified to the virtual machine in a form of an interrupt received when the virtual machine runs.

Regardless of the source of the virtual interrupt, before the virtual interrupt finally arrives at the virtual machine, a host machine needs to use various mechanisms of the host machine to complete sending of the virtual interrupt from the source to the target virtual machine. In a process of sending the virtual interrupt, a control flow of a processor needs to be switched from a running virtual machine to the host machine, or switched from a user mode of the host machine to a kernel mode of the host machine. This causes relatively large switching overheads.

### SUMMARY

Embodiments of this application provide a chip system, a virtual interrupt processing method, and a corresponding apparatus, to reduce switching overheads generated due to a virtual interrupt when switching from a virtual machine to a host machine or from a user mode of a host machine to a kernel mode of the host machine. Embodiments of this application further provide a corresponding computer device, a computer storage medium, a computer program product, and the like.

A first aspect of this application provides a chip system. The chip system includes a source physical processor, a control apparatus, an intermediate apparatus, a sending apparatus, and a target physical processor. The source physical processor is configured to run a host machine or a virtual machine. The control apparatus includes a register. The register is configured to receive information used to trigger a virtual interrupt. The information used to trigger the virtual interrupt may come from the host machine or the virtual machine. The control apparatus is configured to: send the information that is in the register and that is used to trigger the virtual interrupt to the intermediate apparatus. The intermediate apparatus is configured to: trigger the virtual interrupt based on the information used to trigger the virtual interrupt, and send the virtual interrupt to the sending apparatus. The sending apparatus is configured to: receive the virtual interrupt from the intermediate apparatus, and send the virtual interrupt to the target physical processor.

In this application, the chip system may be a system on chip (system on chip, SOC), and the source physical processor and the target physical processor each may be a processing unit (processing unit), for example, a physical core. The control apparatus, the intermediate apparatus, and the sending apparatus may all be implemented by using a hardware circuit, or may be implemented by using software. The source physical processor and the target physical processor may be physical cores in a multi-core processor. The multi-core processor includes a plurality of physical cores. The physical core is a core integrated in the processor. The physical core is a processing unit. For example, a dual-core processor may be understood as a processor having two physical cores. The control apparatus and the sending apparatus may be deployed in the multi-core processor, and are coupled to the source physical processor and the target physical processor. The intermediate apparatus may be deployed in the multi-core processor, or may be deployed on a peripheral device/peripheral component coupled to the multi-core processor. The system on chip may include the multi-core processor and a peripheral device/peripheral component coupled to the multi-core processor. Any physical processor in the chip system may be used as the source physical processor, or may be used as the target physical processor.

In this application, a virtual interrupt (virtual interrupt) is an interrupt sent to a virtual machine (virtual machine, VM) by a hardware device in a computer device, a host machine, a clock of the virtual machine, a virtual processor (virtual processor) of the virtual machine, or the like. A hardware device that generates the virtual interrupt may be a disk, a network adapter, an audio adapter, a mouse, a hard disk, or the like in the computer device. A physical interrupt is an interrupt sent by a hardware device to a physical processor. A physical interrupt is processed by a host machine, and a virtual interrupt is processed by a virtual machine.

It should be noted that a specific implementation of the virtual processor mentioned in embodiments of this application may be a virtual central processing unit (virtual central processing unit, vCPU). The "vCPU" mentioned later can be replaced with "virtual processor" for understanding.

In this application, the virtual interrupt may include a virtual local interrupt (virtual local interrupt), a virtual software interrupt (virtual software interrupt), a virtual device interrupt (virtual device interrupt), and a direct peripheral interrupt (direct peripheral interrupt). The virtual local interrupt refers to an interrupt sent by a virtual local device simulated by the virtual machine or an interrupt sent by a local device of a vCPU of the virtual machine, for example, a clock interrupt sent by a timer of a vCPU of the virtual machine. A virtual software interrupt is triggered by software, and is generally an interrupt sent by a vCPU of a virtual machine to another vCPU of the virtual machine. A virtual machine may have a plurality of vCPUs, and these vCPUs may run on different physical processors at a moment to execute different tasks of the virtual machine. When tasks executed by different vCPUs depend on each other or need to be scheduled, a virtual software interrupt occurs. A virtual device interrupt refers to an interrupt triggered by a host machine simulating a hardware device, for example, an interrupt generated by a host machine simulating a virtual machine disk controller or simulating another hardware device.

In this application, the control apparatus may include at least one register, where each register may be configured to receive one type of information used to trigger a virtual interrupt. For example, three registers are included, where one register is configured to receive information used to trigger a virtual local interrupt, one register is configured to receive information used to trigger a virtual software interrupt, and one register is configured to receive information used to trigger a virtual device interrupt. Certainly, in the control apparatus, only one register may be configured for the virtual interrupt, and information used to trigger each type of virtual interrupt is different. The type of the virtual interrupt may be identified by using information received by the register.

There may be one or more intermediate apparatuses. The sending apparatus may be that each physical processor has one sending apparatus, or may be that a plurality of physical processors share one sending apparatus.

It can be learned from the first aspect that in the first aspect, a register dedicated to processing a virtual interrupt is disposed in a control apparatus. In this way, a host machine or a virtual machine in a user mode or a kernel mode may directly write information used to trigger a virtual interrupt into the register. The control apparatus may send the information used to trigger the virtual interrupt to an intermediate apparatus, and the intermediate apparatus triggers the virtual interrupt. In addition, the intermediate apparatus sends the virtual interrupt to a sending apparatus, and the sending apparatus sends the virtual interrupt to a target physical processor. In the solution provided in this application, the host machine or the virtual machine may directly access the register, and write the information used to trigger the virtual interrupt into the register, so that the virtual interrupt is sent. Therefore, compared with the conventional technology, in the solution provided in this application, the source physical processor does not need to switch from the virtual machine to the host machine, and the source physical processor does not need to switch from the user mode of the host machine to the kernel mode of the host machine, thereby reducing switching overheads generated during virtual interrupt processing and improving performance of a chip system.

In a possible implementation of the first aspect, the virtual interrupt is a virtual local interrupt, the target physical processor and the source physical processor are a same physical processor, and the register is configured to receive information that is written by the virtual machine and that is used to trigger the virtual local interrupt. The sending apparatus is configured to: send the virtual local interrupt to a first virtual processor vCPU of the virtual machine, where the first vCPU runs on the source physical processor.

In this possible implementation, because the virtual local interrupt is an intra-core interrupt, the target physical processor and the source physical processor are a same physical processor. The intermediate apparatus may be a timer, and the virtual local interrupt may be a clock interrupt. One physical processor runs only one vCPU of one virtual machine at one moment, and an operation of sending the virtual local interrupt to the virtual machine can be completed by sending the virtual local interrupt to the vCPU. It can be learned from the possible implementation that, in a process of processing the virtual local interrupt, the source physical processor does not need to switch from the virtual machine to the host machine, thereby reducing switching overheads generated during processing of the virtual local interrupt, and improving performance of the chip system.

In a possible implementation of the first aspect, the virtual interrupt is a virtual software interrupt, and the information used to trigger the virtual interrupt includes an identifier of a second vCPU written into the register by a first vCPU of the virtual machine, where the second vCPU is a vCPU of the virtual machine running on the target physical processor. The control apparatus is configured to: read the identifier of the second vCPU from the register, and obtain an identifier of the virtual machine; and send the identifier of the virtual machine and the identifier of the second vCPU to the intermediate apparatus. The intermediate apparatus is configured to: determine, from a first correspondence based on the identifier of the virtual machine and the identifier of the second vCPU, a target physical processor corresponding to the identifier of the virtual machine and the identifier of the second vCPU, where the first correspondence is used to record a correspondence between the target physical processor, the second vCPU running on the target processor, and the virtual machine; and send the virtual software interrupt to a sending apparatus corresponding to the target physical processor. The sending apparatus is configured to send the virtual software interrupt to the second vCPU running on the target physical processor.

In this possible implementation, the virtual software interrupt is an interrupt sent by the first vCPU of the virtual machine to the second vCPU of the virtual machine. Therefore, when the first vCPU of the virtual machine needs to trigger the virtual software interrupt, the identifier of the second vCPU needs to be written into the register. One virtual machine may have a plurality of vCPUs, and vCPUs belonging to one virtual machine may run on one physical processor in a time division multiplexing manner. For example, a vCPU1 of a virtual machine 1 is first run on a physical processor 1, and after the physical processor 1 ends running of the vCPU1, a vCPU2 of the virtual machine 1 may run. A plurality of vCPUs belonging to one virtual machine may also run on different physical processors, and different vCPUs may run on different physical processors at one moment. For example, the vCPU1 of the virtual machine 1 runs on the physical processor 1, and the vCPU2 of the virtual machine 1 runs on a physical processor 2. In the virtual software interrupt scenario, the first vCPU runs on the source physical processor, and the second vCPU runs on the target physical processor. The control apparatus may obtain the identifier of the virtual machine from a register dedicated to storing the identifier of the virtual machine running on the source physical processor. Each virtual machine may have a plurality of vCPUs, and identifiers of vCPUs of different virtual machines may be the same. Therefore, the control apparatus needs to send the identifier of the virtual machine and the identifier of the second vCPU to the intermediate apparatus. The intermediate apparatus may store the first correspondence. The first correspondence may be located in an in-position vCPU identifier group. The in-position vCPU identifier group records a correspondence between each physical processor in the chip system, a vCPU running on each physical processor, and a virtual machine to which the running vCPU belongs. In this application, the physical processor may be determined by searching for an in-position vCPU identifier group. It can be learned from the possible implementation that, in a process of processing the virtual software interrupt, the source physical processor does not need to switch from the virtual machine to the host machine, thereby reducing switching overheads generated during processing of the virtual software interrupt, and improving performance of the chip system.

In a possible implementation of the first aspect, the virtual interrupt is a virtual device interrupt, and the information used to trigger the virtual interrupt includes a target interrupt number and an identifier of the virtual machine that are written by the host machine into the register, where the target interrupt number is an identifier of an interrupt triggered when the host machine simulates a hardware device. The control apparatus is configured to read the target interrupt number and the identifier of the virtual machine from the register, and send the identifier of the virtual machine and the target interrupt number to the intermediate apparatus. The intermediate apparatus is configured to: based on the identifier of the virtual machine and the target interrupt number, search a second correspondence for an identifier of a first vCPU of a virtual machine corresponding to the identifier of the virtual machine and the target interrupt number, where the second correspondence is used to record a correspondence between the virtual machine, the target interrupt number, and the first vCPU; determine, from a third correspondence based on the identifier of the virtual machine and the identifier of the first vCPU, a target physical processor corresponding to the identifier of the virtual machine and the identifier of the first vCPU, where the third correspondence is used to record a correspondence between the target physical processor, the first vCPU running on the target processor, and the virtual machine; and send the virtual device interrupt to a sending apparatus corresponding to the target physical processor. The sending apparatus is configured to send the virtual device interrupt to the first vCPU running on the target physical processor.

In this possible implementation, the virtual device interrupt is an interrupt triggered by a hardware device simulated by a host machine in a user mode when simulating a hardware device. There may be a plurality of types of hardware devices, and an interrupt number of each type of hardware device is different. If the host machine simulates a disk, the target interrupt number is an interrupt number of the disk. Because the host machine may manage a plurality of virtual machines, the host machine needs to write the identifier of the virtual machine and the target interrupt number into the register. The second correspondence may be located in an interrupt affinity table. The interrupt affinity table may be configured by the virtual machine. Therefore, there is an interrupt affinity table for each virtual machine. In this way, the interrupt affinity table of the virtual machine may be found based on the identifier of the virtual machine, and then a corresponding vCPU is determined from the interrupt affinity table of the virtual machine based on the target interrupt number. A target interrupt number is 10. If the interrupt number 10 in the interrupt affinity table corresponds to vCPU ID1, it may be determined that a vCPU ID corresponding to the target interrupt number is 1. After determining that the vCPU ID is 1, the routing apparatus may find, based on the in-position vCPU identifier group, a physical processor corresponding to the vCPU ID1. For a meaning of the in-position vCPU identifier group, refer to the description of the virtual software interrupt for understanding, and for the third correspondence, refer to the first correspondence for understanding. It can be learned from the possible implementation that, in a process of processing the virtual device interrupt, the source physical processor does not need to switch from a user mode of the host machine to a kernel mode of the host machine, thereby reducing switching overheads generated during processing of the virtual device interrupt, and improving performance of the chip system.

In a possible implementation of the first aspect, the intermediate apparatus includes an address register, where the address register is configured to store an address of the second correspondence in a memory and the identifier of the virtual machine. The intermediate apparatus is further configured to: search the address register based on the identifier of the virtual machine, and obtain the second correspondence from the memory based on an address in the address register.

In this possible implementation, the interrupt affinity table may be stored in the intermediate apparatus, or may be stored in a memory. The intermediate apparatus may provide an address register for each physical processor. The address register may be a base address register, and the base address register may store an address of the interrupt affinity table in the memory and the identifier of the virtual machine. In this way, it can be avoided that excessive storage space of the intermediate apparatus is occupied.

In a possible implementation of the first aspect, the sending apparatus is configured to write the virtual interrupt into a pending register of the target physical processor, where the pending register is configured to receive a command of a procedure executed by the target physical processor.

In this possible implementation, the pending register is configured to receive a command to be executed subsequently by the target physical processor, and write the virtual interrupt into the pending register, so that the target physical processor executes the virtual interrupt subsequently. In this way, a currently executed process may be interrupted, thereby shielding an action of switching to the host machine in the existing solution. This reduces overheads of switching the target physical processor from the virtual machine to the host machine.

A second aspect of this application provides a chip system. The chip system includes a source physical processor, a control apparatus, an intermediate apparatus, a sending apparatus, and a target physical processor. The source physical processor is configured to run a host machine or a virtual machine. The chip system further includes a hardware device for direct communication between the virtual machine and the virtual machine. The intermediate apparatus is configured to: receive a direct peripheral interrupt triggered by the hardware device; search, based on a physical interrupt number of the direct peripheral interrupt, a virtual interrupt table for an identifier of a corresponding virtual machine and a virtual interrupt number, where the virtual interrupt table records a correspondence between the physical interrupt number and the identifier of the virtual machine and the virtual interrupt number; determine a corresponding interrupt affinity table based on the identifier of the virtual machine, and determine, from the interrupt affinity table, the identifier of the virtual machine and an identifier of a target virtual processor vCPU corresponding to the virtual interrupt number, where the interrupt affinity table records a correspondence between the virtual interrupt number and the virtual processor; determine, from an in-position vCPU identifier group based on the identifier of the target vCPU, a target physical processor corresponding to the identifier of the target vCPU; and send the direct peripheral interrupt to a sending apparatus corresponding to the target physical processor. The sending apparatus sends the direct peripheral interrupt to the virtual machine running on the target physical processor.

In the second aspect, the direct peripheral interrupt refers to an interrupt triggered by a peripheral device that is directly connected to the virtual machine, for example, an interrupt generated by a graphics card that is directly connected to the virtual machine. In a process of processing the direct peripheral interrupt, the virtual interrupt table, the interrupt affinity table, and the in-position vCPU identifier group are used in sequence. For understanding of the interrupt affinity table and the in-position vCPU identifier group, refer to descriptions in the possible implementations of the first aspect. The following describes the virtual interrupt table. The virtual interrupt table maintains a mapping relationship between a physical interrupt number, an identifier of a virtual machine, and a virtual interrupt number. After a physical interrupt number is input, the identifier of the virtual machine and the virtual interrupt number can be output. In the process of processing the direct peripheral interrupt, the intermediate apparatus receives a physical interrupt number sent by the direct peripheral, and searches the virtual interrupt table for a corresponding virtual machine identifier and a virtual interrupt number based on the physical interrupt number For example, if a physical interrupt number 100 is input, a virtual machine identifier 1 and a virtual interrupt number 10 may be output. Then, based on the identifier 1 of the virtual machine and the virtual interrupt number 10, the interrupt affinity table is searched, and a corresponding vCPU ID is found, for example, the vCPU ID is found to be 1. Further, based on the vCPU ID, the in-position vCPU identifier group is searched for the corresponding physical processor. For example, if a physical processor 1 is found, the intermediate apparatus may send the direct peripheral interrupt to a sending apparatus corresponding to the physical processor 1, and the sending apparatus sends the direct peripheral interrupt to a vCPU corresponding to the vCPU ID1.

In the process of processing the direct peripheral interrupt provided in the second aspect, a sending process can be completed by searching for the three correspondences, thereby improving flexibility of processing the direct peripheral interrupt.

A third aspect of this application provides a control apparatus. The control apparatus is applied to a chip system. The chip system further includes a source physical processor, an intermediate apparatus, and a sending apparatus. The source physical processor is configured to run a host machine or a virtual machine. The control apparatus includes a register. The register is configured to receive information used to trigger a virtual interrupt. The information used to trigger the virtual interrupt comes from the host machine or the virtual machine. The control apparatus is configured to: read the information used to trigger the virtual interrupt from the register, and send the information used to trigger the virtual interrupt to the intermediate apparatus. The information used to trigger the virtual interrupt is used to enable the intermediate apparatus to trigger the virtual interrupt, and the virtual interrupt is sent to a target physical processor by the sending apparatus.

In a possible implementation of the third aspect, the virtual interrupt is a virtual local interrupt, the target physical processor and the source physical processor are a same physical processor, and the register is configured to receive information that is written by the virtual machine and that is used to trigger the virtual local interrupt. The control apparatus is configured to: send the information used to trigger the virtual local interrupt to the intermediate apparatus. The information used to trigger the virtual local interrupt is used to enable the intermediate apparatus to trigger the virtual local interrupt, the virtual local interrupt is sent by the sending apparatus to a first virtual processor vCPU of the virtual machine, and the first vCPU runs on the source physical processor.

In a possible implementation of the third aspect, the virtual interrupt is a virtual software interrupt, the information used to trigger the virtual interrupt includes an identifier of a second vCPU written into a register by a first vCPU of the virtual machine, and the second vCPU is a vCPU of the virtual machine that runs on the target physical processor. The control apparatus is configured to read the identifier of the second vCPU from the register, and obtain an identifier of the virtual machine; and send the identifier of the virtual machine and the identifier of the second vCPU to the intermediate apparatus, where the identifier of the virtual machine and the identifier of the second vCPU are used by the intermediate apparatus to determine the target physical processor and trigger a virtual software interrupt. The virtual software interrupt is sent by the sending apparatus to the second vCPU of the target physical processor.

In a possible implementation of the third aspect, the virtual interrupt is a virtual device interrupt. The information used to trigger the virtual interrupt includes a target interrupt number written by the host machine into the register and an identifier of the virtual machine, and the target interrupt number is an identifier of an interrupt triggered when the host machine simulates a hardware device. The control apparatus is configured to: read the target interrupt number and the identifier of the virtual machine from the register, and send the target interrupt number and the identifier of the virtual machine to the intermediate apparatus. The identifier of the virtual machine and the target interrupt number are used by the intermediate apparatus to determine the target physical processor and trigger the virtual device interrupt, and the virtual device interrupt is sent by the sending apparatus to a first vCPU of the target physical processor.

A fourth aspect of this application provides an intermediate apparatus. The intermediate apparatus is applied to a chip system. The chip system further includes a source physical processor, a control apparatus, a sending apparatus, and a target physical processor. The source physical processor is configured to run a host machine or a virtual machine. The control apparatus includes a register. The register is configured to receive information used to trigger a virtual interrupt. The information used to trigger the virtual interrupt comes from the host machine or the virtual machine. The intermediate apparatus is configured to: receive the information used to trigger the virtual interrupt from the control apparatus, trigger the virtual interrupt based on the information used to trigger the virtual interrupt, and send the virtual interrupt to the sending apparatus. The virtual interrupt is sent to the target physical processor by the sending apparatus.

In a possible implementation of the fourth aspect, the virtual interrupt is a virtual local interrupt, the target physical processor and the source physical processor are a same physical processor, and the register is configured to receive information that is written by the virtual machine and that is used to trigger the virtual local interrupt. The intermediate apparatus is configured to: trigger the virtual local interrupt based on the information used to trigger the virtual local interrupt, and send the virtual local interrupt to the sending apparatus. The virtual local interrupt is sent by the sending apparatus to a first virtual processor vCPU of the virtual machine, and the first vCPU runs on the source physical processor.

In a possible implementation of the fourth aspect, the virtual interrupt is a virtual software interrupt, and the information used to trigger the virtual interrupt includes an identifier of a second vCPU written into the register by a first vCPU of the virtual machine, where the second vCPU is a vCPU of the virtual machine running on the target physical processor. The intermediate apparatus is configured to: receive an identifier of the virtual machine and the identifier of the second vCPU from the control apparatus; determine, from a first correspondence based on the identifier of the virtual machine and the identifier of the second vCPU, a target physical processor corresponding to the identifier of the virtual machine and the identifier of the second vCPU, where the first correspondence is used to record a correspondence between the target physical processor, the second vCPU running on the target processor, and the virtual machine; trigger the virtual software interrupt; and send the virtual software interrupt to a sending apparatus corresponding to the target physical processor. The virtual software interrupt is sent by the sending apparatus to the second vCPU of the target physical processor.

In a possible implementation of the fourth aspect, the virtual interrupt is a virtual device interrupt, and the information used to trigger the virtual interrupt includes a target interrupt number and an identifier of the virtual machine that are written by the host machine into the register, where the target interrupt number is an identifier of an interrupt triggered when the host machine simulates a hardware device. The intermediate apparatus is configured to: receive the identifier of the virtual machine and the target interrupt number from the control device; search, based on the identifier of the virtual machine and the target interrupt number, a second correspondence for an identifier of a first vCPU of a virtual machine corresponding to the identifier of the virtual machine and the target interrupt number, where the second correspondence is used to record a correspondence between the virtual machine, the target interrupt number, and the first vCPU; determine, from a third correspondence based on the identifier of the virtual machine and the identifier of the first vCPU, a target physical processor corresponding to the identifier of the virtual machine and the identifier of the first vCPU, where the third correspondence is used to record a correspondence between the target physical processor, the first vCPU running on the target processor, and the virtual machine; trigger a virtual device interrupt; and send the virtual device interrupt to a sending apparatus corresponding to the target physical processor. The virtual device interrupt is sent by the sending apparatus to the first vCPU of the target physical processor.

In a possible implementation of the fourth aspect, the intermediate apparatus includes an address register, where the address register is configured to store an address of the second correspondence in a memory and the identifier of the virtual machine. The intermediate apparatus is further configured to: search the address register based on the identifier of the virtual machine, and obtain the second correspondence from the memory based on an address in the address register.

A fifth aspect of this application provides a sending apparatus. The sending apparatus is applied to a chip system. The chip system further includes a source physical processor, an intermediate apparatus, a target physical processor, and a control apparatus. The source physical processor is configured to run a host machine or a virtual machine. The control apparatus includes a register. The register is configured to receive information used to trigger a virtual interrupt. The information used to trigger the virtual interrupt comes from the host machine or the virtual machine. The sending apparatus is configured to receive the virtual interrupt from the intermediate apparatus, and send the virtual interrupt to the target physical processor.

In a possible implementation of the fifth aspect, the virtual interrupt is a virtual local interrupt, and the target physical processor and the source physical processor are a same physical processor. The sending apparatus is configured to: receive a virtual local interrupt from the intermediate apparatus, and send the virtual local interrupt to a first virtual processor vCPU of the virtual machine, where the first vCPU runs on the source physical processor.

In a possible implementation of the fifth aspect, the virtual interrupt is a virtual software interrupt, the information used to trigger the virtual interrupt includes an identifier of a second vCPU written into a register by a first vCPU of the virtual machine, and the second vCPU is a vCPU of the virtual machine that runs on the target physical processor. The sending apparatus is configured to: receive a virtual software interrupt from the intermediate apparatus, and send the virtual software interrupt to the second vCPU running on the target physical processor.

In a possible implementation of the fifth aspect, the virtual interrupt is a virtual device interrupt. The information used to trigger the virtual interrupt includes a target interrupt number written by the host machine into the register and an identifier of the virtual machine, and the target interrupt number is an identifier of an interrupt triggered when the host machine simulates a hardware device. The sending apparatus is configured to: receive a virtual device interrupt from the intermediate apparatus, and send the virtual device interrupt to a first vCPU running on the target physical processor.

In a possible implementation of the fifth aspect, the sending apparatus is configured to write the virtual interrupt into a pending register of the target physical processor, where the pending register is configured to receive a command of a procedure executed by the target physical processor.

For features described in the third aspect to the fifth aspect and any possible implementation of the third aspect to the fifth aspect, and corresponding intended effects, refer to the descriptions in the first aspect and any possible implementation of the first aspect for understanding. Details are not described herein again.

A sixth aspect of this application provides a virtual interrupt processing method. The method is applied to a control apparatus of a chip system. The chip system further includes a source physical processor, an intermediate apparatus, a sending apparatus, and a target physical processor. The source physical processor is configured to run a host machine or a virtual machine. The control apparatus includes a register. The register is configured to receive information used to trigger a virtual interrupt. The information used to trigger the virtual interrupt comes from the host machine or the virtual machine. The method includes: reading the information used to trigger the virtual interrupt from the register, and sending the information used to trigger the virtual interrupt to the intermediate apparatus. The information used to trigger the virtual interrupt is used to enable the intermediate apparatus to trigger the virtual interrupt, and the virtual interrupt is sent to the target physical processor by the sending apparatus.

In a possible implementation of the sixth aspect, the virtual interrupt is a virtual local interrupt, the target physical processor and the source physical processor are a same physical processor, and the register is configured to receive information that is written by the virtual machine and that is used to trigger the virtual local interrupt. The information used to trigger the virtual local interrupt is used to enable the intermediate apparatus to trigger the virtual local interrupt, the virtual local interrupt is sent by the sending apparatus to a first virtual processor vCPU of the virtual machine, and the first vCPU runs on the source physical processor.

In a possible implementation of the sixth aspect, the virtual interrupt is a virtual software interrupt, the information used to trigger the virtual interrupt includes an identifier of a second vCPU written into a register by a first vCPU of the virtual machine, and the second vCPU is a vCPU of the virtual machine that runs on the target physical processor. The method further includes: obtaining an identifier of the virtual machine; and sending the identifier of the virtual machine and the identifier of the second vCPU to the intermediate apparatus, where the identifier of the virtual machine and the identifier of the second vCPU are used by the intermediate apparatus to determine the target physical processor and trigger a virtual software interrupt. The virtual software interrupt is sent by the sending apparatus to the second vCPU of the target physical processor.

In a possible implementation of the sixth aspect, the virtual interrupt is a virtual device interrupt. The information used to trigger the virtual interrupt includes a target interrupt number written by the host machine into the register and an identifier of the virtual machine, and the target interrupt number is an identifier of an interrupt triggered when the host machine simulates a hardware device. The identifier of the virtual machine and the target interrupt number are used by the intermediate apparatus to determine the target physical processor and trigger the virtual device interrupt, and the virtual device interrupt is sent by the sending apparatus to the first vCPU of the target physical processor.

A seventh aspect of this application provides a virtual interrupt processing method. The method is applied to an intermediate apparatus of a chip system. The chip system further includes a source physical processor, a control apparatus, a sending apparatus, and a target physical processor. The source physical processor is configured to run a host machine or a virtual machine. The control apparatus includes a register. The register is configured to receive information used to trigger a virtual interrupt. The information used to trigger the virtual interrupt comes from the host machine or the virtual machine. The method includes: receiving the information used to trigger the virtual interrupt from the control apparatus; triggering the virtual interrupt based on the information used to trigger the virtual interrupt; and sending the virtual interrupt to the sending apparatus. The virtual interrupt is sent to the target physical processor by the sending apparatus.

In a possible implementation of the seventh aspect, the virtual interrupt is a virtual local interrupt, the target physical processor and the source physical processor are a same physical processor, and the register is configured to receive information that is written by the virtual machine and that is used to trigger the virtual local interrupt. The information used to trigger the virtual local interrupt is used to trigger the virtual local interrupt, the virtual local interrupt is sent by the sending apparatus to a first virtual processor vCPU of the virtual machine, and the first vCPU runs on the source physical processor.

In a possible implementation of the seventh aspect, the virtual interrupt is a virtual software interrupt, and the information used to trigger the virtual interrupt includes an identifier of a second vCPU written into the register by a first vCPU of the virtual machine, where the second vCPU is a vCPU of the virtual machine running on the target physical processor. The foregoing step of triggering the virtual interrupt based on the information used to trigger the virtual interrupt includes: determining, from a first correspondence based on an identifier of the virtual machine and the identifier of the second vCPU, a target physical processor corresponding to the identifier of the virtual machine and the identifier of the second vCPU, where the first correspondence is used to record a correspondence between the target physical processor, the second vCPU running on the target processor, and the virtual machine; and triggering the virtual software interrupt. The virtual software interrupt is sent by the sending apparatus to the second vCPU of the target physical processor.

In a possible implementation of the seventh aspect, the virtual interrupt is a virtual device interrupt, and the information used to trigger the virtual interrupt includes a target interrupt number and an identifier of the virtual machine that are written by the host machine into the register, where the target interrupt number is an identifier of an interrupt triggered when the host machine simulates a hardware device. The foregoing step of triggering the virtual interrupt based on the information used to trigger the virtual interrupt includes: based on the identifier of the virtual machine and the target interrupt number, searching a second correspondence for an identifier of a first vCPU of a virtual machine corresponding to the identifier of the virtual machine and the target interrupt number, where the second correspondence is used to record a correspondence between the virtual machine, the target interrupt number, and the first vCPU; determining, from a third correspondence based on the identifier of the virtual machine and the identifier of the first vCPU, a target physical processor corresponding to the identifier of the virtual machine and the identifier of the first vCPU, where the third correspondence is used to record a correspondence between the target physical processor, the first vCPU running on the target processor, and the virtual machine; and triggering a virtual device interrupt. The virtual device interrupt is sent by the sending apparatus to the first vCPU of the target physical processor.

In a possible implementation of the seventh aspect, the method further includes: finding an address register based on the identifier of the virtual machine, and obtaining the second correspondence from a memory based on an address in the address register, where the address register is configured to store an address of the second correspondence in the memory and the identifier of the virtual machine.

An eighth aspect of this application provides a virtual interrupt processing method. The method is applied to a sending apparatus of a chip system. The chip system further includes a source physical processor, an intermediate apparatus, a control apparatus, and a target physical processor. The source physical processor is configured to run a host machine or a virtual machine. The control apparatus includes a register. The register is configured to receive information used to trigger a virtual interrupt. The information used to trigger the virtual interrupt comes from the host machine or the virtual machine. The method includes: receiving the virtual interrupt from the intermediate apparatus, and sending the virtual interrupt to the target physical processor.

In a possible implementation of the eighth aspect, the virtual interrupt is a virtual local interrupt, and the target physical processor and the source physical processor are a same physical processor. The foregoing step of sending the virtual interrupt to the target physical processor includes: sending the virtual local interrupt to a first virtual processor vCPU of the virtual machine, where the first vCPU runs on the source physical processor.

In a possible implementation of the eighth aspect, the virtual interrupt is a virtual software interrupt, the information used to trigger the virtual interrupt includes an identifier of a second vCPU written into a register by a first vCPU of the virtual machine, and the second vCPU is a vCPU of the virtual machine that runs on the target physical processor. The foregoing step of sending the virtual interrupt to the target physical processor includes: sending the virtual software interrupt to the second vCPU running on the target physical processor.

In a possible implementation of the eighth aspect, the virtual interrupt is a virtual device interrupt. The information used to trigger the virtual interrupt includes a target interrupt number written by the host machine into the register and an identifier of the virtual machine, and the target interrupt number is an identifier of an interrupt triggered when the host machine simulates a hardware device. The foregoing step of sending the virtual interrupt to the target physical processor includes: sending the virtual device interrupt to a first vCPU running on the target physical processor.

In a possible implementation of the eighth aspect, the method further includes: writing the virtual interrupt into a pending register of the target physical processor, where the pending register is configured to receive a command of a procedure executed by the target physical processor.

For features described in the sixth aspect to the eighth aspect and any possible implementation of the sixth aspect to the eighth aspect, and corresponding intended effects, refer to the descriptions in the first aspect and any possible implementation of the first aspect for understanding. Details are not described herein again.

A ninth aspect of this application provides a control apparatus. The control apparatus is applied to a chip system. The chip system further includes a source physical processor, an intermediate apparatus, a sending apparatus, and a target physical processor. The source physical processor is configured to run a host machine or a virtual machine. The control apparatus includes a register. The register is configured to receive information used to trigger a virtual interrupt. The information used to trigger the virtual interrupt comes from the host machine or the virtual machine. The control apparatus includes: a reading unit, configured to read the information used to trigger the virtual interrupt from the register; and a sending unit, configured to send the information used to trigger the virtual interrupt to the intermediate apparatus. The information used to trigger the virtual interrupt is used by the intermediate apparatus to trigger the virtual interrupt, and the virtual interrupt is sent to the target physical processor by the sending apparatus.

In a possible implementation of the ninth aspect, the virtual interrupt is a virtual local interrupt, the target physical processor and the source physical processor are a same physical processor, and the register is configured to receive information that is written by the virtual machine and that is used to trigger the virtual local interrupt. The information used to trigger the virtual local interrupt is used to enable the intermediate apparatus to trigger the virtual local interrupt, the virtual local interrupt is sent by the sending apparatus to a first virtual processor vCPU of the virtual machine, and the first vCPU runs on the source physical processor.

In a possible implementation of the ninth aspect, the virtual interrupt is a virtual software interrupt, the information used to trigger the virtual interrupt includes an identifier of a second vCPU written into a register by a first vCPU of the virtual machine, and the second vCPU is a vCPU of the virtual machine that runs on the target physical processor. The control apparatus further includes: a processing unit, configured to obtain an identifier of the virtual machine; and a sending unit, configured to send the identifier of the virtual machine and the identifier of the second vCPU to the intermediate apparatus, where the identifier of the virtual machine and the identifier of the second vCPU are used by the intermediate apparatus to determine the target physical processor and trigger a virtual software interrupt. The virtual software interrupt is sent by the sending apparatus to the second vCPU of the target physical processor.

In a possible implementation of the ninth aspect, the virtual interrupt is a virtual device interrupt. The information used to trigger the virtual interrupt includes a target interrupt number written by the host machine into the register and an identifier of the virtual machine, and the target interrupt number is an identifier of an interrupt triggered when the host machine simulates a hardware device. The identifier of the virtual machine and the target interrupt number are used by the intermediate apparatus to determine the target physical processor and trigger the virtual device interrupt, and the virtual device interrupt is sent by the sending apparatus to the first vCPU of the target physical processor.

A tenth aspect of this application provides an intermediate apparatus. The intermediate apparatus is applied to a chip system. The chip system further includes a source physical processor, a control apparatus, a sending apparatus, and a target physical processor. The source physical processor is configured to run a host machine or a virtual machine. The control apparatus includes a register. The register is configured to receive information used to trigger a virtual interrupt. The information used to trigger the virtual interrupt comes from the host machine or the virtual machine. The intermediate apparatus includes: a receiving unit, configured to receive the information used to trigger the virtual interrupt from the control apparatus; a processing unit, configured to trigger the virtual interrupt based on the information used to trigger the virtual interrupt; and a sending unit, configured to send the virtual interrupt to the sending apparatus. The virtual interrupt is sent to the target physical processor by the sending apparatus.

In a possible implementation of the tenth aspect, the virtual interrupt is a virtual local interrupt, the target physical processor and the source physical processor are a same physical processor, and the register is configured to receive information that is written by the virtual machine and that is used to trigger the virtual local interrupt. The information used to trigger the virtual local interrupt is used to trigger the virtual local interrupt, the virtual local interrupt is sent by the sending apparatus to a first virtual processor vCPU of the virtual machine, and the first vCPU runs on the source physical processor.

In a possible implementation of the tenth aspect, the virtual interrupt is a virtual software interrupt, and the information used to trigger the virtual interrupt includes an identifier of a second vCPU written into the register by a first vCPU of the virtual machine, where the second vCPU is a vCPU of the virtual machine running on the target physical processor. The processing unit is configured to: determine, from a first correspondence based on an identifier of the virtual machine and the identifier of the second vCPU, a target physical processor corresponding to the identifier of the virtual machine and the identifier of the second vCPU, where the first correspondence is used to record a correspondence between the target physical processor, the second vCPU running on the target processor, and the virtual machine; and trigger the virtual software interrupt. The virtual software interrupt is sent by the sending apparatus to the second vCPU of the target physical processor.

In a possible implementation of the tenth aspect, the virtual interrupt is a virtual device interrupt, and the information used to trigger the virtual interrupt includes a target interrupt number and an identifier of the virtual machine that are written by the host machine into the register, where the target interrupt number is an identifier of an interrupt triggered when the host machine simulates a hardware device. The processing unit is configured to: based on the identifier of the virtual machine and the target interrupt number, search a second correspondence for an identifier of a first vCPU of a virtual machine corresponding to the identifier of the virtual machine and the target interrupt number, where the second correspondence is used to record a correspondence between the virtual machine, the target interrupt number, and the first vCPU; determine, from a third correspondence based on the identifier of the virtual machine and the identifier of the first vCPU, a target physical processor corresponding to the identifier of the virtual machine and the identifier of the first vCPU, where the third correspondence is used to record a correspondence between the target physical processor, the first vCPU running on the target processor, and the virtual machine; and trigger a virtual device interrupt. The virtual device interrupt is sent by the sending apparatus to the first vCPU of the target physical processor.

In a possible implementation of the tenth aspect, the processing unit is further configured to: find an address register based on the identifier of the virtual machine, and obtain the second correspondence from a memory based on an address in the address register, where the address register is configured to store an address of the second correspondence in the memory and the identifier of the virtual machine.

An eleventh aspect of this application provides a sending apparatus. The sending apparatus is applied to a chip system. The chip system further includes a source physical processor, an intermediate apparatus, a control apparatus, and a target physical processor. The source physical processor is configured to run a host machine or a virtual machine. The control apparatus includes a register. The register is configured to receive information used to trigger a virtual interrupt. The information used to trigger the virtual interrupt comes from the host machine or the virtual machine. The sending apparatus includes: a receiving unit, configured to receive the virtual interrupt from the intermediate apparatus; and a sending unit, configured to send the virtual interrupt to the target physical processor.

In a possible implementation of the eleventh aspect, the virtual interrupt is a virtual local interrupt, and the target physical processor and the source physical processor are a same physical processor. The sending unit is configured to: send the virtual local interrupt to a first virtual processor vCPU of the virtual machine, where the first vCPU runs on the source physical processor.

In a possible implementation of the eleventh aspect, the virtual interrupt is a virtual software interrupt, the information used to trigger the virtual interrupt includes an identifier of a second vCPU written into a register by a first vCPU of the virtual machine, and the second vCPU is a vCPU of the virtual machine that runs on the target physical processor. The sending unit is configured to: send the virtual software interrupt to the second vCPU running on the target physical processor.

In a possible implementation of the eleventh aspect, the virtual interrupt is a virtual device interrupt. The information used to trigger the virtual interrupt includes a target interrupt number written by the host machine into the register and an identifier of the virtual machine, and the target interrupt number is an identifier of an interrupt triggered when the host machine simulates a hardware device. The sending unit is configured to send the virtual device interrupt to a first vCPU running on the target physical processor.

In a possible implementation of the eleventh aspect, the sending unit is configured to write the virtual interrupt into a pending register of the target physical processor, where the pending register is configured to receive a command of a procedure executed by the target physical processor.

For features described in the ninth aspect to the eleventh aspect and any possible implementation of the ninth aspect to the eleventh aspect, and corresponding intended effects, refer to the descriptions in the first aspect and any possible implementation of the first aspect for understanding. Details are not described herein again.

A twelfth aspect of this application provides a computer-readable storage medium storing one or more computer-executable instructions. When the computer-executable instructions are executed by a processor, the processor performs the method according to the sixth aspect or any one of the possible implementations of the sixth aspect.

A thirteenth aspect of this application provides a computer-readable storage medium storing one or more computer-executable instructions. When the computer-executable instructions are executed by a processor, the processor performs the method according to the seventh aspect or any one of the possible implementations of the seventh aspect.

A fourteenth aspect of this application provides a computer-readable storage medium storing one or more computer-executable instructions. When the computer-executable instructions are executed by a processor, the processor performs the method according to the eighth aspect or any one of the possible implementations of the eighth aspect.

A fifteenth aspect of this application provides a computer program product storing one or more computer-executable instructions. When the computer-executable instructions are executed by a processor, the processor performs the method according to the sixth aspect or any one of the possible implementations of the sixth aspect.

A sixteenth aspect of this application provides a computer program product storing one or more computer-executable instructions. When the computer-executable instructions are executed by a processor, the processor performs the method according to the seventh aspect or any one of the possible implementations of the seventh aspect.

A seventeenth aspect of this application provides a computer program product storing one or more computer-executable instructions. When the computer-executable instructions are executed by a processor, the processor performs the method according to the eighth aspect or any one of the possible implementations of the eighth aspect.

An eighteenth aspect of this application provides a computer device. The computer device includes the chip system according to the first aspect or any one of the possible implementations of the first aspect.

A nineteenth aspect of this application provides a chip system. The chip system includes a source physical processor, a control apparatus, a sending apparatus, and a target physical processor. The control apparatus is according to the third aspect, the ninth aspect, any one of the possible implementations of the third aspect, or any one of the possible implementations of the ninth aspect, and the sending apparatus is according to the fifth aspect, the eleventh aspect, any one of the possible implementations of the eleventh aspect, or any one of the possible implementations of the fifth aspect.

In an implementation, the chip system may further include the intermediate apparatus according to the fourth aspect, the tenth aspect, any one of the possible implementations of the tenth aspect, or any one the possible implementations of the fourth aspect.

In an implementation, the chip system according to the nineteenth aspect is a processor, the source physical processor and the target physical processor are physical cores in the processor, the control apparatus is located in the processor and is a component coupled to the source physical processor, and the sending apparatus is a component located in the processor and is coupled to the target physical processor. It may be understood that any physical core of the processor may be used as a receiver of the virtual interrupt. Therefore, a physical core may be used as a source physical processor and also a target physical processor. Correspondingly, that is coupled to the physical core may include both a control apparatus and a sending apparatus.

According to the chip system provided in this embodiment of this application, a register dedicated to processing a virtual interrupt is disposed in a control apparatus. In this way, a host machine or a virtual machine in a user mode may directly write information used to trigger a virtual interrupt into the register. The control apparatus may send the information used to trigger the virtual interrupt to an intermediate apparatus, and the intermediate apparatus triggers the virtual interrupt. In addition, the intermediate apparatus sends the virtual interrupt to a sending apparatus, and the sending apparatus sends the virtual interrupt to a target physical processor. In the solution provided in this application, the host machine or the virtual machine may directly access the register, and write the information used to trigger the virtual interrupt into the register, so that the virtual interrupt is sent. Therefore, compared with the conventional technology, in the solution provided in this application, the source physical processor does not need to switch from the virtual machine to the host machine or switch from the user mode of the host machine to the kernel mode of the host machine, thereby reducing switching overheads generated during virtual interrupt processing and improving performance of a chip system.

### BRIEF DESCRIPTION OF DRAWINGS

FIG. 1 is a schematic diagram of a structure of a computer device according to an embodiment of this application;
FIG. 2 is a schematic diagram of a type of a virtual interrupt according to an embodiment of this application;
FIG. 3 is a schematic diagram of a structure of a chip system according to an embodiment of this application;
FIG. 4 is a schematic diagram of another structure of a chip system according to an embodiment of this application;
FIG. 5 is a schematic diagram of a virtual clock interrupt according to an embodiment of this application;
FIG. 6 is a schematic diagram of an example of an in-position virtual processor identifier group according to an embodiment of this application;
FIG. 7 is a schematic diagram of an example of a virtual software interrupt according to an embodiment of this application;
FIG. 8 is a schematic diagram of a structure of a routing apparatus according to an embodiment of this application;
FIG. 9 is a schematic diagram of an example of a direct peripheral interrupt according to an embodiment of this application;
FIG. 10 is a schematic diagram of a structure of a chip system in a RISC-V microarchitecture according to an embodiment of this application;
FIG. 11 is a schematic diagram of a process of processing a virtual clock interrupt in a RISC-V microarchitecture according to an embodiment of this application;
FIG. 12 is a schematic diagram of a process of processing a virtual software interrupt in a RISC-V microarchitecture according to an embodiment of this application;
FIG. 13 is a schematic diagram of a process of processing a virtual device interrupt in a RISC-V microarchitecture according to an embodiment of this application;
FIG. 14 is a schematic diagram of another process of processing a virtual device interrupt in a RISC-V microarchitecture according to an embodiment of this application;
FIG. 15 is a schematic diagram of a process of processing a direct peripheral interrupt in a RISC-V microarchitecture according to an embodiment of this application;
FIG. 16 is a schematic diagram of an embodiment of a virtual interrupt processing method according to an embodiment of this application;
FIG. 17 is a schematic diagram of an embodiment of a control apparatus according to an embodiment of this application;
FIG. 18 is a schematic diagram of an embodiment of an intermediate apparatus according to an embodiment of this application;
FIG. 19 is a schematic diagram of an embodiment of a sending apparatus according to an embodiment of this application; and
FIG. 20 is a schematic diagram of another structure of a computer device according to an embodiment of this application.

### DESCRIPTION OF EMBODIMENTS

The following describes embodiments of this application with reference to the accompanying drawings. Apparently, the described embodiments are merely some rather than all of embodiments of this application. A person of ordinary skill in the art may learn that, with development of technologies and emergence of new scenarios, the technical solutions provided in this application are also applicable to similar technical problems.

In the specification, claims, and accompanying drawings of this application, the terms "first", "second", and so on are intended to distinguish between similar objects but do not necessarily indicate a specific order or sequence. It should be understood that the data termed in such a way are interchangeable in proper circumstances so that the embodiments described herein can be implemented in other orders than the order illustrated or described herein. In addition, the terms "include", "contain" and any other variants mean to cover the non-exclusive inclusion, for example, a process, method, system, product, or device that includes a series of steps or units is not necessarily limited to those steps or units that are expressly listed, but may include other steps or units not expressly listed or inherent to such a process, method, system, product, or device.

Embodiments of this application provide a chip system, a virtual interrupt processing method, and a corresponding apparatus, to reduce switching overheads generated due to a virtual interrupt when switching from a virtual machine to a host machine or from a user mode of a host machine to a kernel mode of the host machine. Embodiments of this application further provide a corresponding computer device, a computer storage medium, a computer program product, and the like. Details are described below separately.

Virtualization is to virtualize a hardware resource (for example, a processor, storage space in a memory, and a network resource) at a hardware layer of a computer device, and then share the virtualized hardware resource with multiple virtual computers for use. A virtual computer is a general name of running environments virtualized by software in all types of virtualized devices, and this concept includes a virtual machine or a container.

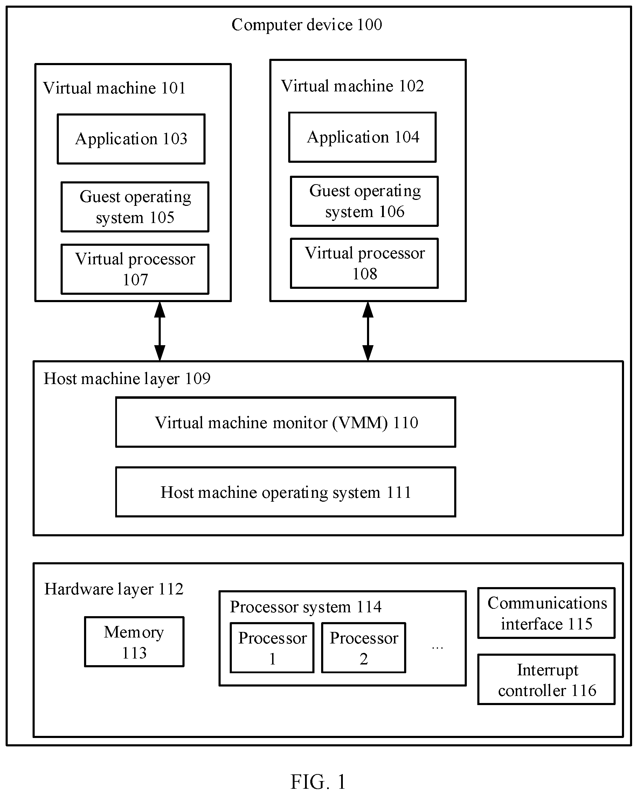

As shown in FIG. 1, a computer device 100 includes a hardware layer 112, a host layer 109, and a virtualization layer. The virtualization layer includes virtual machines 101 and 102. A quantity of the virtual machines may be more or less, and a case in which a quantity of the virtual machines is two is used as an example herein. The hardware layer 112 includes a processor system 114, a memory 113, a communications interface 115, and an interrupt controller 116.

A virtual machine (virtual machine, VM) is simulated on a computer device by using virtualization software. A guest operating system (guest operating system, guest OS) (105 and 106 in FIG. 1) may be installed on the virtual machine (101 and 102 in FIG. 1), and one or more applications (103 and 104 in FIG. 1) are run on the guest operating system. The virtual machine may further access a network resource. An application running on the virtual machine works as if the application works on a real computer.

A virtual processor (for example, 107 and 108 in FIG. 1) represents a processing unit provided to a virtual computer for use in a sharing or slicing manner in a virtualization technology, for example, a virtual CPU (virtual central processing unit, vCPU). One virtual computer may be served by one or more virtual processors. When there are a plurality of virtual processors, usually, one virtual processor is a primary virtual processor, and others are secondary virtual processors. Other virtual hardware resources such as a virtual memory included in the virtual machine are not shown in FIG. 1. The virtual processor is obtained through virtualization by using virtualization software. Running of the virtual processor is actually implemented as follows: A processor or physical core of a host reads and runs a software program. For example, a physical core reads the software program and runs the software program in a specific mode (for example, a non-root mode of x86) of hardware-assisted virtualization of the physical core, to implement the virtual processor. The plurality of virtual processors of the virtual machine may be located on different physical cores. It should be noted that the vCPU mentioned in embodiments of this application is an optional specific implementation of the virtual processor. The "vCPU" mentioned in each embodiment may be replaced with "virtual processor" for understanding.

Trap-in (trap in) and trap-out (trap out) of a virtual processor: A virtual system includes two modes: a host mode (host mode) and a guest mode (guest mode). The host mode may also be referred to as a privilege level of the host, for example, a user mode of the host or a kernel mode of the host. The guest mode may also be referred to as a privilege level of the VM, for example, a user mode of the VM or a kernel mode of the VM. When a physical processor enters the guest mode, it is called trap-in (virtual), and a trap-in process may also be understood as that the physical processor switches from running a host machine to running a virtual machine. When the physical processor leaves the guest mode, it is called trap-out (virtual), and a trap-out process may also be understood as that the physical processor switches from running a virtual machine to running a host machine. After the trap-out, the physical processor temporarily stops executing code of the virtual processor. Therefore, this case may be understood as that the virtual processor is not running. When a virtual machine runs on the physical processor, a virtual processor of the virtual machine runs. One virtual machine may have a plurality of virtual processors. One physical processor runs only one virtual processor of the virtual machine at one moment. A plurality of virtual processors belonging to a same virtual machine may run on the physical processor in a time division multiplexing manner. For example, a vCPU 1 of a virtual machine 1 first runs on a physical processor 1, and after the physical processor 1 ends running of the vCPU 1, a vCPU 2 of the virtual machine 1 may run. A plurality of vCPUs that belong to a same virtual machine may alternatively run on different physical processors, and different vCPUs may run on different physical processors at one moment. For example, a vCPU 1 of a virtual machine 1 runs on a physical processor 1, and a vCPU 2 of the virtual machine 1 runs on a physical processor 2. As a management layer, the host machine (host) layer 109 is configured to complete management and allocation of hardware resources, provide various virtual hardware resources for the virtual machine, such as a virtual processor (107,108), a virtual memory, a virtual disk, and a virtual network adapter, and may further implement scheduling and isolation of the virtual machine. In some implementations, the host layer 109 includes a host operating system 111 and a virtual monitoring apparatus, for example, a virtual machine monitor 110 (virtual machine monitor, VMM). The virtual machine monitor 110 may be deployed inside the host operating system 111 or outside the host operating system 111. In another virtualization architecture, the virtual monitoring apparatus may also be referred to as a hypervisor or another type of virtual monitoring apparatus. The host layer 109 may also be referred to as a virtualization platform, and sometimes the host layer may also be referred to as a host for short. The privilege level of the host machine includes the user mode and the kernel mode.

The hardware layer 112 is a hardware platform on which a virtualized environment runs. The hardware layer may include a plurality of types of hardware. As shown in FIG. 1, the hardware layer may include a processor system 114 and a memory 113, may further include a communications interface 115, for example, a network interface card (network interface card, NIC), and may further include an interrupt controller 116, an input/output (input/output, I/O) device, and the like. The processor system 114 may include one or more processors, for example, a processor 1 and a processor 2 shown in FIG. 1. Each processor may include a plurality of physical cores, and the processor may further include a plurality of registers, for example, a general purpose register and a floating point register.

The processor system 114 may include a plurality of processors, for example, the processor 1 and the processor 2 in FIG. 1. Both the processor 1 and the processor 2 in FIG. 1 are physical processors, such as a source physical processor and a target physical processor. Each physical processor may be understood as a physical core. The processor system 114 may be specifically a multi-core processor, and the multi-core processor includes a source physical processor and a target physical processor. A virtual processor may be bound to a physical core. In other words, a virtual processor always runs on a specific physical core, and cannot be scheduled onto another physical core for running. In this case, the virtual processor is a bound core. If a virtual processor may be scheduled, depending on a requirement, onto different physical cores for running, the virtual processor is not a bound core.

The interrupt controller 116 is disposed between a processor and hardware that triggers an interrupt request, and is mainly configured to collect interrupt requests generated by hardware, and send the interrupt requests to the processor based on a specific priority or according to another rule. For example, the interrupt controller is an advanced programmable interrupt controller (advanced programmable interrupt controller, APIC).

An interrupt (interruption) suspends executing an instruction of a current program and executes an interrupt service routine. The interrupt may include a virtual interrupt and a physical interrupt. The virtual interrupt refers to an interrupt that is notified to a virtual machine (virtual machine, VM) by a hardware device in a computer device, a host machine, a clock of the virtual machine, a virtual processor (virtual central processing unit, vCPU) of the virtual machine, or the like. A hardware device that generates the virtual interrupt may be a disk, a network adapter, an audio adapter, a mouse, a hard disk, or the like in the computer device. A physical interrupt is an interrupt notified by a hardware device to a physical processor. A physical interrupt is processed by a host machine, and a virtual interrupt is processed by a virtual machine.

An interrupt service routine (interrupt service routine, ISR) may also be referred to as an interrupt processing function, and is a program used to process an interrupt request. When receiving an interrupt request, a processor suspends executing a current program and executes an interrupt service routine corresponding to the interrupt request.

Storage space (address space) provided by the memory 113 is allocated to a virtual machine and a host for use. A host physical address (host physical address, HPA) is physical address space that can be used by a local host (host). A host virtual address (host virtual address, HVA) is virtual address space that can be used by the local host (host). A guest physical address (guest physical address, GPA) is physical address space that can be used by a guest operating system of a virtual machine. A guest virtual address (guest virtual address, GVA) is virtual address space that can be used by the guest operating system of the virtual machine.

The computer device 100 may be a physical device, for example, a server or a terminal device. The terminal device may be a handheld device with a wireless connection function, or another processing device connected to a wireless modem. For example, the terminal device may be a mobile phone, a computer (personal computer, PC), a tablet computer, a personal digital assistant (personal digital assistant, PDA), a mobile Internet device (mobile Internet device, MID), a wearable device, and an e-book reader (e-book reader), and may also be a portable mobile device, a pocket-sized mobile device, a hand-held mobile device, a computer built-in mobile device, or a vehicle-mounted mobile device.

The virtual machine or the host machine in the computer device 100 may send information used to trigger a virtual interrupt, so that the chip system provided in this embodiment of this application completes a corresponding process of processing the virtual interrupt. The chip system provided in this embodiment of this application may include the interrupt controller and the processor system in FIG. 1, or may include the interrupt controller or the processor system in FIG. 1.

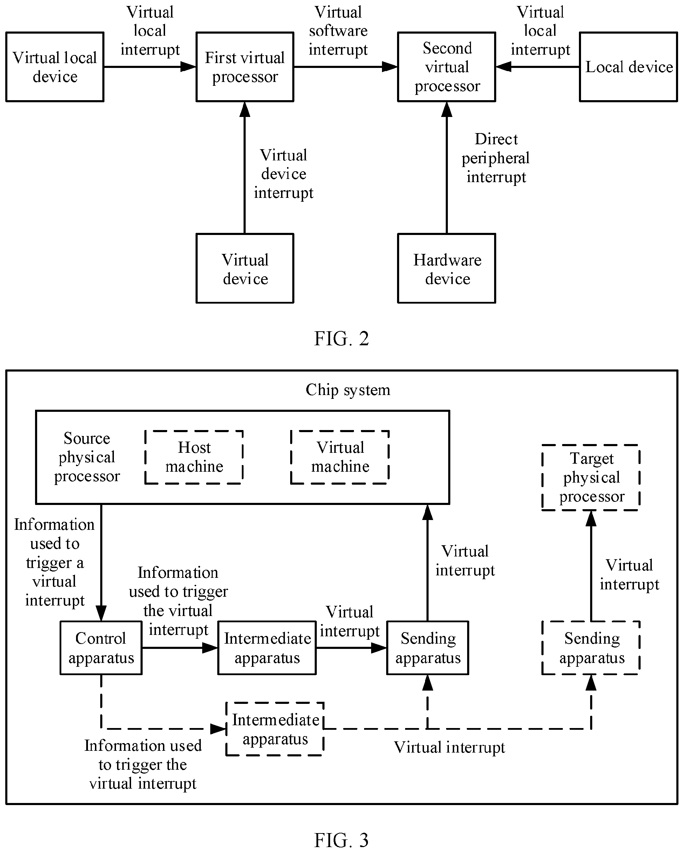

In this embodiment of this application, as shown in FIG. 2, the virtual interrupt may include a virtual local interrupt (virtual local interrupt), a virtual software interrupt (virtual software interrupt), a virtual device interrupt (virtual device interrupt), and a direct peripheral interrupt (direct peripheral interrupt). The virtual local interrupt refers to an interrupt sent by a virtual local device, such as a virtual timer or a virtual mouse, simulated by a virtual machine, or an interrupt sent by a local device of a vCPU of the virtual machine, for example, an interrupt sent by a timer of a vCPU of the virtual machine. The interrupt sent by the timer is also referred to as a clock interrupt. The clock interrupt refers to an interrupt sent by the timer in a timing manner when a time point configured by the virtual machine is reached. A virtual software interrupt is triggered by software, and is generally an interrupt sent by a vCPU of a virtual machine to another vCPU of the virtual machine. For example, in FIG. 2, an interrupt sent by a first vCPU to a second vCPU that is of a same virtual machine with the first v CPU is shown. One virtual machine may have a plurality of vCPUs, and these vCPUs may run on different physical processors at one moment to execute different tasks of the virtual machine. When tasks executed by different vCPUs depend on each other or need to be scheduled, a virtual software interrupt occurs. A virtual device interrupt refers to an interrupt triggered by a host machine simulating a hardware device, for example, an interrupt generated by a host machine simulating a virtual machine disk controller or simulating another hardware device. A direct peripheral interrupt is triggered by a peripheral device that is directly connected to a virtual machine, for example, an interrupt generated by a graphics card that is directly connected to the virtual machine.

In the foregoing four types of virtual interrupts, for a processing process of a virtual local interrupt, a virtual software interrupt, and a virtual device interrupt, a physical processor running a virtual machine needs to switch from a virtual machine to a host machine, or switch from a user mode of the host machine to a kernel mode of the host machine, which causes relatively high switching overheads. Therefore, embodiments of this application provide a chip system. In a process of processing a virtual interrupt, a physical processor running a virtual machine does not need to switch from a virtual machine to a host machine, or switch from a user mode of the host machine to a kernel mode of the host machine, so that switching overheads can be reduced. The following describes the chip system provided in an embodiment of this application with reference to the accompanying drawings.

As shown in FIG. 3, the chip system provided in this embodiment of this application includes a source physical processor, a control apparatus, an intermediate apparatus, a sending apparatus, and a target physical processor. The source physical processor is configured to run a host machine or a virtual machine. The control apparatus includes a register. The register is configured to receive information used to trigger a virtual interrupt. The information used to trigger the virtual interrupt may come from the host machine or the virtual machine. The control apparatus is configured to send the information that is in the register and that is used to trigger the virtual interrupt to the intermediate apparatus. The intermediate apparatus is configured to: trigger the virtual interrupt based on the information used to trigger the virtual interrupt, and send the virtual interrupt to the sending apparatus. The sending apparatus is configured to: receive the virtual interrupt from the intermediate apparatus, and send the virtual interrupt to the target physical processor.

The chip system may be applied to the computer device shown in FIG. 1, and the chip system may be the interrupt controller or the processor system in FIG. 1.

The chip system provided in this embodiment of this application may be a system on chip (system on chip, SOC), and the source physical processor and the target physical processor each may be a processing unit (processing unit). The source physical processor or the target physical processor may be a physical core and located in a same processor. Alternatively, the source physical processor and the target physical processor may be different processors located in a same chip system. The control apparatus, the intermediate apparatus, and the sending apparatus may all be implemented by using a hardware circuit. The control apparatus and the sending apparatus may be deployed in the multi-core processor, and are coupled to the source physical processor and the target physical processor. The intermediate apparatus may be deployed in the multi-core processor, or may be deployed on a peripheral device/peripheral component coupled to the multi-core processor. The system on chip may include the multi-core processor and a peripheral device/peripheral component coupled to the multi-core processor. Any physical processor in the chip system may be used as the source physical processor, or may be used as the target physical processor.

In this application, a source physical processor and a target physical processor are used. It should be noted that the source physical processor and the target physical processor may be two physical cores in one multi-core processor, or may be two physical cores located in different processors. In an implementation, the source physical processor and the target physical processor may be a same physical entity. For example, in a virtual local interrupt scenario, the source physical processor and the target physical processor may be a same physical processor.

In this application, the control apparatus may include at least one register, where each register may be configured to receive one type of information used to trigger a virtual interrupt. For example, three registers are included, where one register is configured to receive information used to trigger a virtual local interrupt, one register is configured to receive information used to trigger a virtual software interrupt, and one register is configured to receive information used to trigger a virtual device interrupt. Certainly, in the control apparatus, only one register may be configured for the virtual interrupt, and information used to trigger each type of virtual interrupt is different. The type of the virtual interrupt may be identified by using information received by the register

There may be one or more intermediate apparatuses. The sending apparatus may be that each physical processor has one sending apparatus, or may be that a plurality of physical processors share one sending apparatus.

In the chip system provided in this embodiment of this application, a register dedicated to processing a virtual interrupt is set in a control apparatus. In this way, a host machine or a virtual machine in a user mode may directly write information used to trigger a virtual interrupt into the register. The control apparatus may send the information used to trigger the virtual interrupt to an intermediate apparatus, and the intermediate apparatus triggers the virtual interrupt. In addition, the intermediate apparatus sends the virtual interrupt to a sending apparatus, and the sending apparatus sends the virtual interrupt to a target physical processor. The source physical processor does not need to switch from a virtual machine to a host machine, or switch from a user mode of the host machine to a kernel mode of the host machine, thereby reducing switching overheads generated during virtual interrupt processing and improving performance of the chip system.

In FIG. 3, the intermediate apparatus may be a virtual local interrupt generation device, or may be a routing apparatus. If the virtual interrupt is a virtual local interrupt, the intermediate apparatus may be referred to as a local interrupt generation device (for example, a timer). If the virtual interrupt is a virtual software interrupt or a virtual device interrupt, the intermediate apparatus may be referred to as a routing apparatus.

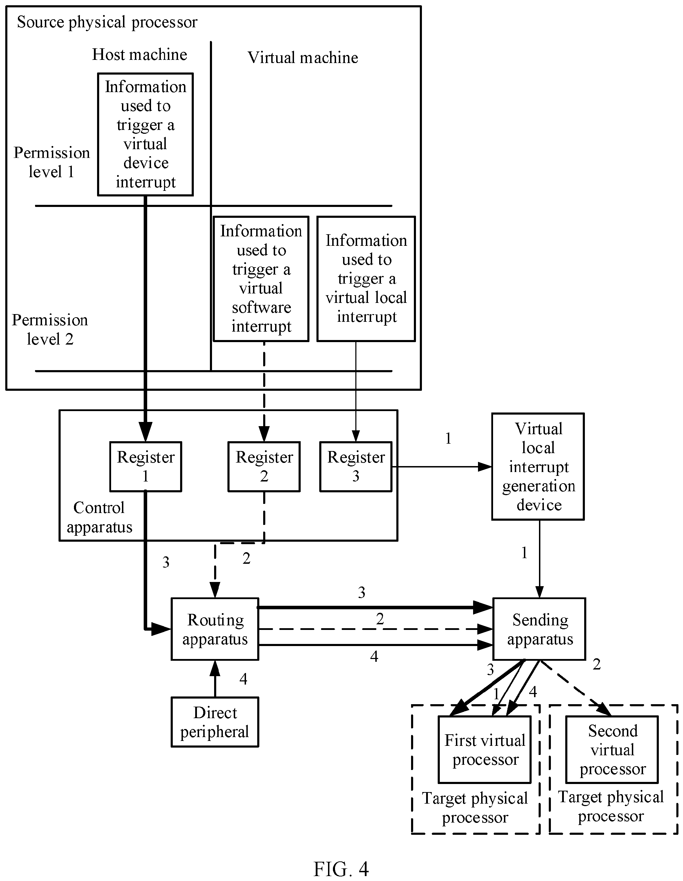

Four types of virtual interrupts are described in FIG. 2. The following describes, with reference to FIG. 4 and by using an example in which a control apparatus includes a register 1, a register 2, and a register 3, processes of processing the four types of virtual interrupts. The register 1 is configured to receive information used to trigger the virtual device interrupt, the register 2 is configured to receive information used to trigger the virtual software interrupt, and the register 3 is configured to receive information used to trigger the virtual local interrupt.

In a chip system shown in FIG. 4, a source physical processor is configured to run a host machine or a virtual machine, and the host machine or the virtual machine may have a permission level 1 and a permission level 2. The permission level 1 may be a user mode, and the permission level 2 may be a kernel mode. In different virtualization architectures, states corresponding to the permission level 1 and the permission level 2 may be different. This is not limited in this embodiment of this application.

In FIG. 4 of this application, the four types of virtual interrupts are marked by using four different lines. A line marked by a number 1 represents a process of processing the virtual local interrupt, a line marked by a number 2 represents a process of processing the virtual software interrupt, a line marked by a number 3 represents a process of processing the virtual device interrupt, and a line marked by a number 4 represents a process of processing the direct peripheral interrupt.

### 1. Virtual local interrupt

As shown in FIG. 4, in the process of processing the virtual local interrupt, a related register is the register 3, and an intermediate apparatus may be referred to as a local interrupt generation device. Because the virtual local interrupt is an intra-core interrupt, a target physical processor and the source physical processor are a same physical processor, and a sending apparatus corresponds to the source physical processor.

The register is configured to: receive information that is written by the virtual machine and used to trigger the virtual local interrupt.

The local interrupt generation device is configured to generate the virtual local interrupt based on the information used to trigger the virtual local interrupt.

The sending apparatus is configured to send the virtual local interrupt to a first virtual processor vCPU of the virtual machine, where the first vCPU runs on the source physical processor.

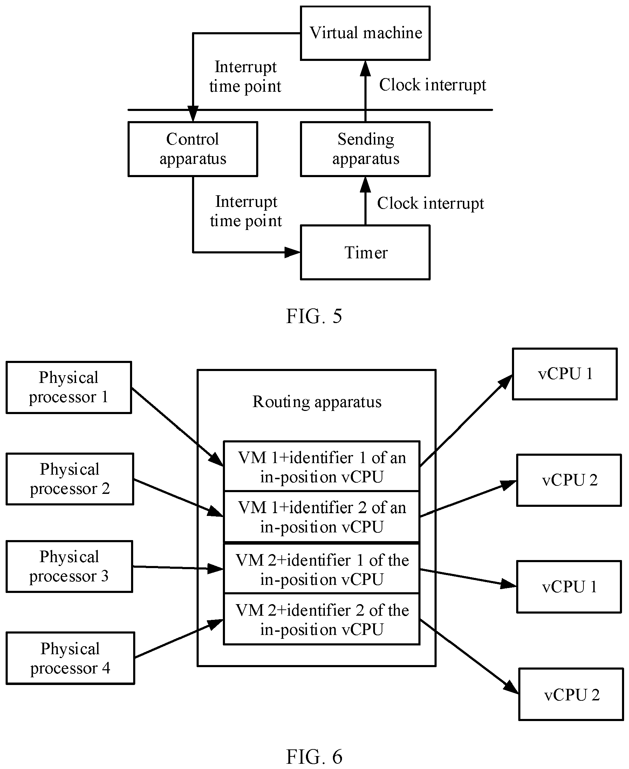

According to the process of processing the virtual local interrupt provided in this embodiment of this application, one physical processor runs only one vCPU of one virtual machine at one moment, and an operation of sending the virtual local interrupt to the virtual machine can be completed by sending the virtual local interrupt to the vCPU. The local interrupt generation device in FIG. 4 may be a timer, and the virtual local interrupt may be a clock interrupt. In a clock interrupt scenario, an implementation of the process may be understood with reference to FIG. 5. As shown in FIG. 5, the virtual machine writes an interrupt time point into the control apparatus (the process may be understood with reference to the register 3 in FIG. 4). The control apparatus writes the interrupt time point into the timer, and the timer starts accordingly. After the preset time point is reached, the timer sends the clock interrupt. After receiving the clock interrupt, the sending apparatus determines that the first vCPU of the virtual machine is running, and sends the clock interrupt to the first vCPU.

It can be learned from the processes in FIG. 4 and FIG. 5 that, in the process of processing the virtual local interrupt, the source physical processor does not need to switch from the virtual machine to the host machine, thereby reducing switching overheads generated during processing of the virtual local interrupt, and improving performance of the chip system.

### 2. Virtual software interrupt

As shown in FIG. 4, in the process of processing the virtual software interrupt, a related register is the register 2, and an intermediate apparatus may be referred to as a routing apparatus. A first vCPU of the virtual machine runs on the source physical processor, and a second vCPU of the virtual machine runs on a target physical processor.

The register is configured to receive an identifier of the second vCPU that is written by the first vCPU.

The control apparatus is configured to: read the identifier of the second vCPU from the register, and obtain an identifier of the virtual machine; and send the identifier of the virtual machine and the identifier of the second vCPU to the intermediate apparatus.

The intermediate apparatus is configured to: determine, from a first correspondence based on the identifier of the virtual machine and the identifier of the second vCPU, the target physical processor corresponding to the identifier of the virtual machine and the identifier of the second vCPU, where the first correspondence is used to record a correspondence between the target physical processor, the second vCPU running on the target processor, and the virtual machine; and send the virtual software interrupt to a sending apparatus corresponding to the target physical processor.

The sending apparatus is configured to send the virtual software interrupt to the second vCPU running on the target physical processor.

In the process of processing the virtual software interrupt in this embodiment of this application, the control apparatus may obtain the identifier of the virtual machine from a register dedicated to storing the identifier of the virtual machine running on the source physical processor. Each virtual machine may have a plurality of vCPUs, and identifiers of vCPUs of different virtual machines may be the same. Therefore, the control apparatus needs to send the identifier of the virtual machine and the identifier of the second vCPU to the intermediate apparatus. The intermediate apparatus may store the first correspondence. The first correspondence may be located in an in-position vCPU identifier group. The in-position vCPU identifier group records a correspondence between each physical processor in the chip system, a vCPU running on each physical processor, and a virtual machine to which the running vCPU belongs. In this application, the target physical processor may be determined by searching for the in-position vCPU identifier group. It can be learned from the foregoing description that, in the process of processing the virtual software interrupt, the source physical processor does not need to switch from the virtual machine to the host machine, thereby reducing switching overheads generated during processing of the virtual software interrupt, and improving performance of the chip system.

The in-position vCPU identifier group may be understood with reference to FIG. 6. Meanings indicated in FIG. 6 are: a vCPU 1 of a VM 1 runs on a physical processor 1, a vCPU 2 of the VM 1 runs on a physical processor 2, a vCPU 1 of a VM 2 runs on a physical processor 3, and a vCPU 2 of the VM 2 runs on a physical processor 4. If the routing apparatus receives an identifier of the VM 1 and an identifier of the vCPU 2 from the control apparatus, it may be determined, based on the in-position vCPU identifier group shown in FIG. 6, that the vCPU 2 runs on the physical processor 2, that is, the virtual software interrupt may be sent to a sending apparatus corresponding to the physical processor 2, and the sending apparatus corresponding to the physical processor 2 sends the virtual software interrupt to the vCPU 2 running on the physical processor 2.

If the second vCPU is not found by using the in-position vCPU identifier group, it indicates that the second vCPU does not run currently. In this case, the routing apparatus may send the virtual software interrupt to a sending apparatus of the source physical processor, the sending apparatus of the source physical processor sends the virtual software interrupt to the host machine, and after the second vCPU goes online and runs, the host machine sends the virtual software interrupt to the second vCPU.

Because the physical processor may run different vCPUs at different times, the correspondence in the in-position vCPU identifier group may change. The in-position vCPU identifier group in the routing apparatus may be managed by the host machine on the source physical processor.

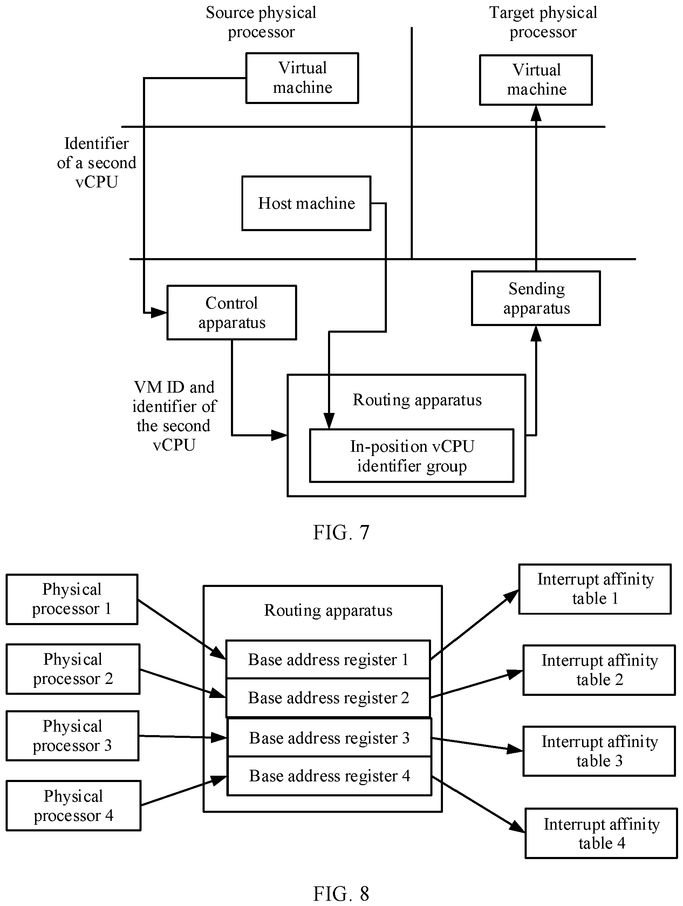

The process of processing the virtual software interrupt in this embodiment of this application may be understood with reference to FIG. 7. The virtual machine runs on the source physical processor, and the first vCPU of the virtual machine runs on the source physical processor. The second vCPU runs on another physical processor, and the first vCPU needs to send the virtual software interrupt to the second vCPU. In this case, the first vCPU of the virtual machine writes the identifier of the second vCPU into the register 2 of the control apparatus. The control apparatus finds the identifier of the virtual machine, and then sends the identifier of the virtual machine and the identifier of the second vCPU to the routing apparatus. The routing apparatus searches for, for example, the in-position vCPU identifier group shown in FIG. 6 based on the identifier of the virtual machine and the identifier of the second vCPU, and determines that a physical processor corresponding to the identifier of the virtual machine and the identifier of the second vCPU is the target physical processor. Then, the routing apparatus sends the virtual software interrupt to the sending apparatus corresponding to the target physical processor, and the sending apparatus corresponding to the target physical processor sends the virtual software interrupt to the second vCPU, namely, the virtual machine running on the target physical processor.

It can be learned from the processes in FIG. 4, FIG. 6, and FIG. 7 that, in the process of processing the virtual software interrupt provided in this embodiment of this application, the source physical processor does not need to switch from the virtual machine to the host machine, thereby reducing switching overheads generated during processing of the virtual software interrupt, and improving performance of the chip system.

### 3. Virtual device interrupt

As shown in FIG. 4, in the process of processing the virtual device interrupt, a related register is the register 1, and an intermediate apparatus is a routing apparatus. The host machine runs on the source physical processor, and the host machine is in a user mode.

The register is configured to receive a target interrupt number written by the host machine and an identifier of the virtual machine, where the target interrupt number is an identifier of an interrupt triggered when the host machine simulates a hardware device.

The control apparatus is configured to: read the target interrupt number and the identifier of the virtual machine from the register, and send the identifier of the virtual machine and the target interrupt number to the intermediate apparatus.

The intermediate apparatus is configured to: search, based on the identifier of the virtual machine and the target interrupt number, a second correspondence for an identifier of a first vCPU that is of the virtual machine and that corresponds to the identifier of the virtual machine and the target interrupt number, where the second correspondence is used to record a correspondence between the virtual machine, the target interrupt number, and the first vCPU; determine, from a third correspondence based on the identifier of the virtual machine and the identifier of the first vCPU, a target physical processor corresponding to the identifier of the virtual machine and the identifier of the first vCPU, where the third correspondence is used to record a correspondence between the target physical processor, the first vCPU running on the target processor, and the virtual machine; and send the virtual device interrupt to a sending apparatus corresponding to the target physical processor.

The sending apparatus is configured to: send the virtual device interrupt to the first vCPU running on the target physical processor.

In this embodiment of this application, the virtual device interrupt is an interrupt triggered when the host machine in the user mode simulates the hardware device. There may be a plurality of types of hardware devices, and an interrupt number of each type of hardware device is different. If the host machine simulates a disk, the target interrupt number is an interrupt number of the disk. Because the host machine may manage a plurality of virtual machines, the host machine needs to write the identifier of the virtual machine and the target interrupt number into the register. The second correspondence may be located in an interrupt affinity table. The interrupt affinity table may be configured by the virtual machine. Therefore, there is an interrupt affinity table for each virtual machine. In this way, the interrupt affinity table of the virtual machine may be found based on the identifier of the virtual machine, and then a corresponding vCPU is determined from the interrupt affinity table of the virtual machine based on the target interrupt number The target interrupt number is 10. If an interrupt number 10 in the interrupt affinity table corresponds to a vCPU ID 1, it may be determined that a vCPU ID corresponding to the target interrupt number is 1. After determining that the vCPU ID is 1, the routing apparatus may find, based on an in-position vCPU identifier group, a physical processor corresponding to the vCPU ID 1. For a meaning of the in-position vCPU identifier group, refer to the description of the virtual software interrupt for understanding, and for the third correspondence, refer to the first correspondence for understanding.

The following describes the interrupt affinity table of the virtual machine with reference to Table 1.

**Table 1: Interrupt affinity table of the virtual machine in FIG. 4**

| Interrupt number | vCPU ID |
|---|---|
| 10 | 1 |
| 20 | 2 |
| 30 | 3 |
| 40 | 4 |

Table 1 is merely an example, and the correspondence is not limited to the several types listed in Table 1. There may alternatively be a correspondence in another representation form, and there may be more in quantity. Another column may further be added to Table 1, and the added column is used to store the identifier of the virtual machine in FIG. 4.

The interrupt affinity table may be stored in the routing apparatus, or may be stored in a memory. The routing apparatus may provide an address register for each physical processor. The address register may be a base address register. The base address register may store an address of the interrupt affinity table in the memory and the identifier of the virtual machine. As shown in FIG. 8, a base address register 1 on the routing apparatus corresponds to a physical processor 1, a base address register 2 corresponds to a physical processor 2, a base address register 3 corresponds to a physical processor 3, and a base address register 4 corresponds to a physical processor 4. An address in each base address register points to one interrupt affinity table. For example, the base address register 1 points to an interrupt affinity table 1, the base address register 2 points to an interrupt affinity table 2, the base address register 3 points to an interrupt affinity table 3, and the base address register 4 points to an interrupt affinity table 4. If a same virtual machine runs on two physical processors, addresses in base address registers corresponding to the two physical processors may be the same, and pointed interrupt affinity tables may be a same table.

In this way, in the process of processing the virtual device interrupt, the virtual machine writes the target interrupt number into the register 1, the control apparatus reads the identifier of the currently running virtual machine from the register dedicated to storing the virtual machine running on the source physical processor, and then the control apparatus sends the target interrupt number and the identifier of the virtual machine to the routing apparatus. The routing apparatus determines the corresponding interrupt affinity table based on the identifier of the virtual machine, and then searches the interrupt affinity table for the identifier of the corresponding vCPU by using the target interrupt number. If the target interrupt number is 10, it may be determined that the identifier of the corresponding vCPU is 1. After determining that the identifier of the vCPU is 1, the routing apparatus may find, based on the in-position vCPU identifier group shown in FIG. 6, that a processor corresponding to the vCPU 1 is the physical processor 1. The routing apparatus may send the virtual device interrupt to a sending apparatus corresponding to the physical processor 1, and the sending apparatus sends the virtual device interrupt to the first vCPU corresponding to the vCPU 1.

If the first vCPU is not found by using the in-position vCPU identifier group, it indicates that the first vCPU does not run currently. In this case, the routing apparatus may send the virtual software interrupt to a sending apparatus of the source physical processor, the sending apparatus of the source physical processor sends the virtual software interrupt to the host machine, and after the first vCPU goes online and runs, the host machine sends the virtual software interrupt to the first vCPU.

It can be learned from the processes in FIG. 4, Table 1, FIG. 8, and FIG. 6 that, in the process of processing the virtual device interrupt provided in this embodiment of this application, the source physical processor does not need to switch from the user mode of the host machine to a kernel mode of the host machine, thereby reducing switching overheads generated in processing the virtual device interrupt, and improving performance of the chip system.

### 4. Direct peripheral interrupt

As shown in FIG. 4, the direct peripheral interrupt is an interrupt triggered by a hardware device that is directly connected to the virtual machine, for example, a graphics card that is directly connected to the virtual machine. An intermediate apparatus may be referred to as a routing apparatus. For the direct peripheral interrupt, an interrupt processing process of this type may be implemented by using the routing apparatus and the sending apparatus. The process includes the following steps.

The intermediate apparatus is configured to: receive the direct peripheral interrupt triggered by the hardware device; search a virtual interrupt table for an identifier of a corresponding virtual machine and a virtual interrupt number based on a physical interrupt number of the direct peripheral interrupt, where the virtual interrupt table records a correspondence between the physical interrupt number, the identifier of the virtual machine, and the virtual interrupt number; determine a corresponding interrupt affinity table based on the identifier of the virtual machine, and determine, from the interrupt affinity table, the identifier of the virtual machine and an identifier of a target virtual processor vCPU corresponding to the virtual interrupt number, where the interrupt affinity table records a correspondence between the virtual processor and the virtual interrupt number; determine, from an in-position vCPU identifier group based on the identifier of the target vCPU, the target physical processor corresponding to the identifier of the target vCPU; and send the direct peripheral interrupt to a sending apparatus corresponding to the target physical processor.

The sending apparatus is configured to send the direct peripheral interrupt to the virtual machine running on the target physical processor.

In this embodiment of this application, in the process of processing the direct peripheral interrupt, the virtual interrupt table, the interrupt affinity table, and the in-position vCPU identifier group are used in sequence. For understanding of the interrupt affinity table and the in-position vCPU identifier group, refer to the foregoing descriptions. The following describes the virtual interrupt table.

The virtual interrupt table maintains a mapping relationship between a physical interrupt number, an identifier of a virtual machine, and a virtual interrupt number. After a physical interrupt number is input, an identifier of a virtual machine and a virtual interrupt number can be output. The virtual interrupt table may be understood with reference to Table 2.

**Table 2: Virtual interrupt table**

| Physical interrupt number | Identifier of a virtual machine | Virtual interrupt number |
|---|---|---|
| 100 | 1 | 10 |
| 200 | 2 | 20 |
| 300 | 3 | 30 |
| 400 | 4 | 40 |

As shown in Table 1, if a physical interrupt number 100 is input, an identifier 1 of a virtual machine and a virtual interrupt number 10 may be output. The virtual interrupt table in this application may be stored in the routing apparatus, or may be stored in a memory, and a location of the virtual interrupt table in the memory is indicated by using another register similar to a base address register.

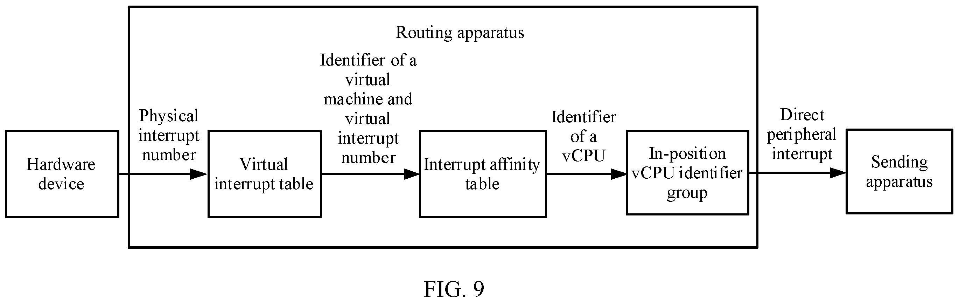

In the process of processing the direct peripheral interrupt, as shown in FIG. 9, the routing apparatus receives a physical interrupt number sent by a direct peripheral, and searches the virtual interrupt table for an identifier of a corresponding virtual machine and a virtual interrupt number by using the physical interrupt number For example, if a physical interrupt number 100 is input, an identifier 1 of a virtual machine and a virtual interrupt number 10 may be output. Then, based on the identifier 1 of the virtual machine and the virtual interrupt number 10, the interrupt affinity table in Table 1 is searched, and an identifier of a corresponding vCPU is found. For example, the identifier of the vCPU is found to be 1. Further, based on the vCPU 1, the in-position vCPU identifier group shown in FIG. 6 is searched for a corresponding physical processor. For example, if the physical processor 1 is found, the routing apparatus may send the direct peripheral interrupt to a sending apparatus corresponding to the physical processor 1, and the sending apparatus sends the direct peripheral interrupt to a first vCPU corresponding to the vCPU 1.

If the first vCPU is not found by using the in-position vCPU identifier group, it indicates that the first vCPU does not run currently. In this case, the routing apparatus may send the virtual software interrupt to a sending apparatus of the source physical processor, the sending apparatus of the source physical processor sends the virtual software interrupt to the host machine, and after the first vCPU goes online and runs, the host machine sends the virtual software interrupt to the first vCPU.

It can be learned from the processes in FIG. 4, Table 2, Table 1, FIG. 6, and FIG. 9 that, in the process of processing the direct peripheral interrupt provided in this embodiment of this application, a sending process may be completed by searching for the three correspondences, thereby improving flexibility of processing the direct peripheral interrupt.

In a process of processing the foregoing four types of virtual interrupts, after receiving any one of the foregoing four types of virtual interrupts from the intermediate apparatus, the sending apparatus sends the virtual interrupt to a corresponding target physical processor. The sending process may be writing the foregoing several types of virtual interrupts to a pending (pending) register, where the pending register is configured to receive a command to be executed by the target physical processor subsequently. After the virtual interrupt is written into the pending register, the target physical processor executes the virtual interrupt. In this way, a currently executed procedure may be interrupted. If the target vCPU is in execution, the target vCPU is interrupted, and the interrupt is sent to the target vCPU. If the host machine is in execution, the host machine is interrupted, and the interrupt is directly sent to the running host machine. After a corresponding target vCPU goes online, the host machine transfers the interrupt to the target vCPU. The target vCPU may be the first vCPU or the second vCPU described above. In this way, in the solution provided in this embodiment of this application, an action of switching to the host machine in the existing solution can be shielded, thereby reducing overheads of switching the target physical processor from the virtual machine to the host machine.

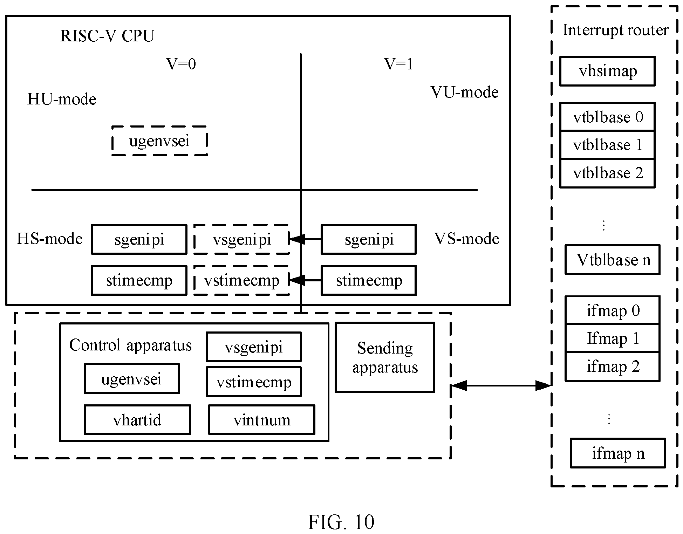

The chip system provided in this embodiment of this application may be applied to a RISC-V microarchitecture. RISC is reduced instruction set computing (reduced instruction set computing). FIG. 10 is a schematic diagram of a structure of a chip system on the RISC-V

As shown in FIG. 10, the chip system includes a control apparatus and a sending apparatus that are configured to interact with a physical processor, and an interrupt router. The interrupt router includes the routing apparatus described in the foregoing embodiments.

In FIG. 10, a RISC-V-CPU represents a central processing unit in a RISC-V architecture, V=0 represents a host machine, V=1 represents a virtual machine, HU-mode represents a user mode of the host machine, HS-mode represents a kernel mode of the host machine, VU-mode represents a user mode of the virtual machine, and VS-mode represents a kernel mode of the virtual machine. Supervisor generate inter-processor interrupt logic (supervisor generate inter-processor interrupt, sgenipi) is used to trigger virtual software interrupt information, and supervisor time compare logic (supervisor time compare, stimecmp) is used to trigger a register of virtual local interrupt information. When V=1, that is, when a virtual machine runs on the RISC-V-CPU, information used to trigger a virtual software interrupt may be sent to a virtual supervisor generate inter-processor interrupt (virtual supervisor generate inter-processor interrupt, vsgenipi) register of the control apparatus through sgenipi, where the vsgenipi register is a register that is described in the foregoing embodiment and that is used to receive the information used to trigger the virtual software interrupt, for example, the register 2. The information used to trigger the virtual local interrupt may be sent to a virtual monitor time compare (virtual supervisor time compare, vstimecmp) register of the control apparatus through stimecmp, where the vstimecmp register is a register that is described in the foregoing embodiment and that is used to receive the information used to trigger the virtual local interrupt, for example, the register 3. A user generate virtual supervisor external interrupt (user generate virtual supervisor external interrupt, ugenvsei) register is a register configured to receive information used to trigger a virtual device interrupt, for example, the register 1 described in the foregoing embodiment. Through the user-mode virtual device simulation logic of the host machine, information used to trigger a virtual device interrupt may be directly sent to the ugenvsei register.

An implementation of the interrupt router includes a virtual hart shared interrupt mapping (virtual hart shared interrupt mapping, vhsimap) register, a group of virtual table base (virtual table base, vtblbase) (1-n) registers, and a group of interrupt control interface mapping (interface mapping, ifmap) registers. The vhsimap (1-n) register is used to point to a virtual interrupt table stored in a memory. Each vtblbase register in the group of vtblbase (1-n) registers corresponds to a physical processor in the RISC-V system, and is used to point to a virtual interrupt affinity table defined by a virtual machine to which a vCPU running on the physical processor belongs. A group of ifmap (1 - n) registers is provided, where each of the ifmap (1-n) registers corresponds to a physical processor in a system, and is used to record an identifier of a vCPU running on the physical processor and an identifier of a virtual machine to which the vCPU belongs.

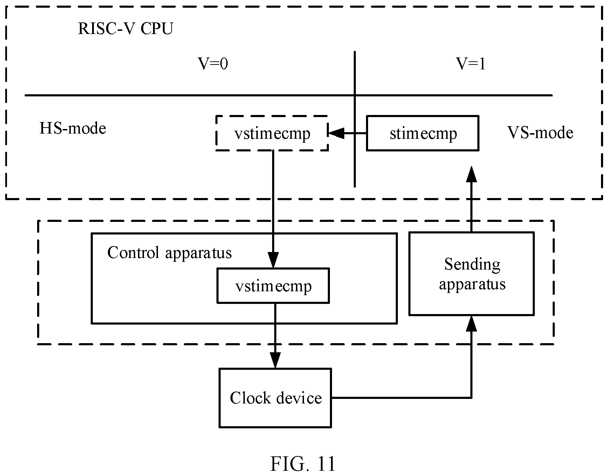

In the RISC-V architecture shown in FIG. 10, a process of processing a virtual clock interrupt may be understood with reference to FIG. 11.

As shown in FIG. 11, a virtual machine writes an interrupt time point into a vstimecmp register through stimecmp, and a control apparatus writes a time point for triggering a next virtual clock interrupt into a dedicated clock device of the virtual machine. When the interruption time point arrives, the dedicated clock device of the virtual machine triggers the virtual clock interrupt. The virtual clock interrupt is sent to the sending apparatus.

The sending apparatus performs determining based on a current virtualization state V of the CPU. If V=1, the sending apparatus directly sends a local interrupt to the virtual machine in the VS-mode; if V=0, the sending apparatus sends the local interrupt to the host machine in the HS-mode, and the host machine performs processing on behalf of the virtual machine. That is, after the virtual machine goes online, the host machine transfers the virtual clock interrupt to the virtual machine.

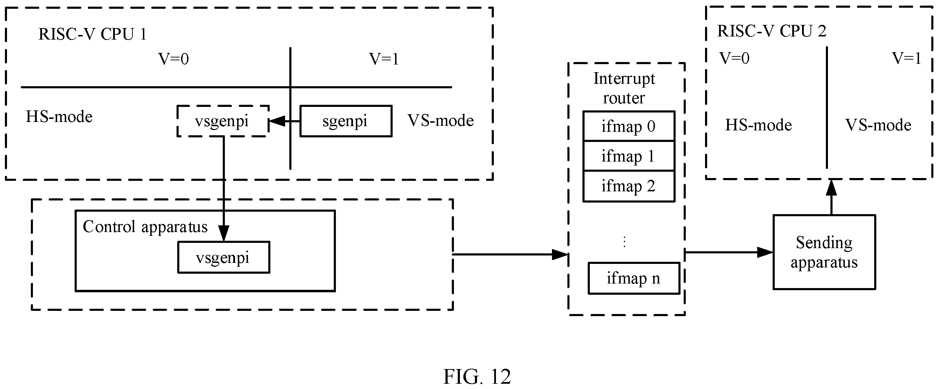

In the RISC-V architecture shown in FIG. 10, a process of processing a virtual software interrupt may be understood with reference to FIG. 12.

As shown in FIG. 12, a vCPU (which may be referred to as a source vCPU in this scenario) of a virtual machine runs on a CPU 1. The CPU 1 may be the source physical processor in the foregoing embodiment. A source vCPU of the virtual machine writes an identifier of a target vCPU into sgenipi, and writes the identifier of the target vCPU into a vsgenipi register in a control apparatus by using the sgenipi. The control apparatus obtains the identifier of the virtual machine, and sends an identifier of the virtual machine and the identifier of the target vCPU (vhartid: identifier of the vCPU in the RISC-V) to the interrupt router. The interrupt router searches ifmapx, and a sequence number x of an ifmapx register including the VM ID and the vhartid is an identifier of a corresponding physical processor (mhartid: identifier of the physical processor in the RISC-V). In this scenario, the identifier of the physical processor is a CPU 2 in FIG. 12. The CPU 2 may also be understood with reference to the target physical processor in the foregoing embodiment. The interrupt router sends a virtual software interrupt to a sending apparatus of the physical processor of the mhartid. The sending apparatus determines a current virtualization state of the physical processor. If V=1, the sending apparatus directly sends the virtual software interrupt to the virtual machine. If V=0, the sending apparatus sends the virtual software interrupt to the host machine for processing. That is, after the virtual machine goes online, the host machine sends the virtual software interrupt to the virtual machine.

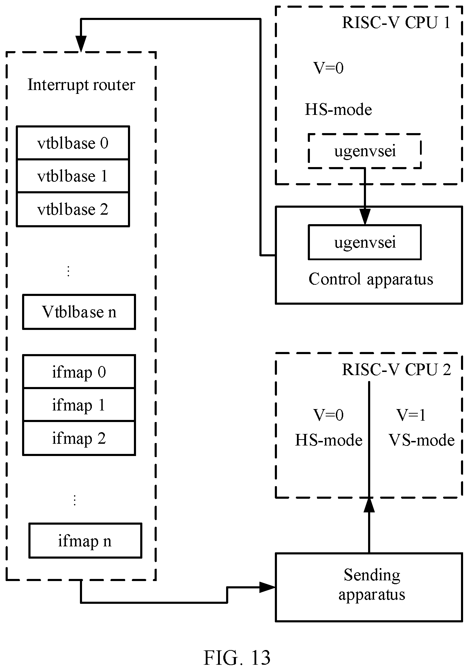

In the RISC-V architecture shown in FIG. 10, a process of processing a virtual device interrupt may be understood with reference to FIG. 13.

As shown in FIG. 13, a host machine in a user mode writes an identifier of a virtual machine and a virtual interrupt number to ugenvsei. A control apparatus sends the identifier of the virtual machine and the virtual interrupt number to the interrupt router. The interrupt router searches the vtblbasex register to find a vtblbasex register that is of the vtblbasex registers and that has the identifier of the virtual machine. An interrupt affinity table stored in a memory to which the register points is searched. A vhartid of a vCPU that processes the interrupt is obtained from the interrupt affinity table. The interrupt router searches ifmapx, and finds a sequence number x of a physical processor corresponding to the register having the VM ID and the vhartid, where x is a mhartid of a target physical processor. The interrupt router sends a virtual device interrupt to a sending apparatus of the physical processor of the mhartid. The sending apparatus determines a current virtualization state of the CPU. If V=1, the sending apparatus directly sends the device interrupt to the virtual machine; or if V=0, the sending apparatus sends the device interrupt to the host machine for processing. That is, after the virtual machine goes online, the host machine sends the virtual device interrupt to the virtual machine.

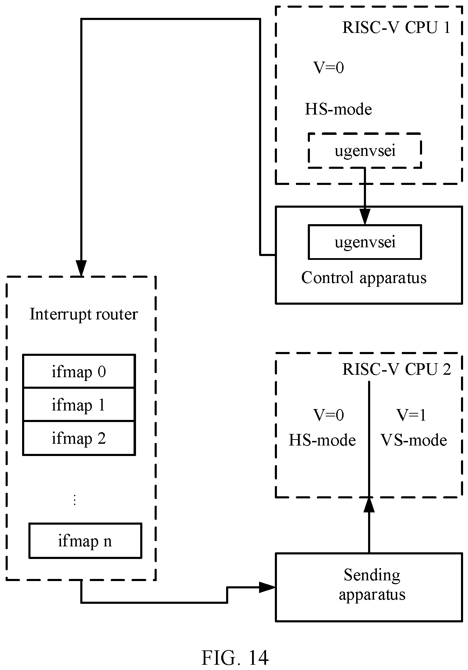

In the RISC-V architecture shown in FIG. 10, another process of processing a virtual device interrupt may be understood with reference to FIG. 14.

As shown in FIG. 14, a host machine writes an identifier of a virtual machine and a virtual interrupt number to ugenvsei. A control apparatus sends the identifier of the virtual machine and the virtual interrupt number to the interrupt router. The interrupt router does not implement vtblbasex and sends a virtual interrupt to any vCPU that has the virtual machine by default. Then, the interrupt router searches ifmapx, and finds a sequence number x of a physical processor corresponding to a register having the identifier of the virtual machine, where x is a mhartid of the target physical processor. The interrupt router sends a virtual device interrupt to a sending apparatus of the physical processor of the mhartid. The sending apparatus determines a current virtualization state of the physical processor. If V=1, the sending apparatus directly sends the virtual device interrupt to the virtual machine; or if V=0, the sending apparatus sends the virtual device interrupt to the host machine for processing. That is, after the virtual machine goes online, the host machine sends the virtual device interrupt to the virtual machine.

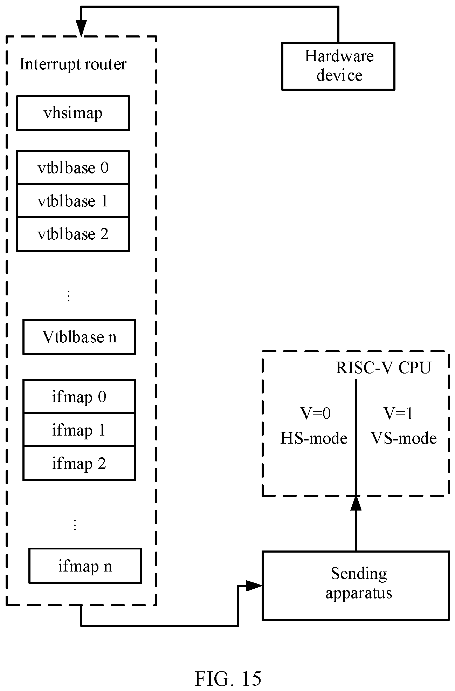

In the RISC-V architecture shown in FIG. 10, a process of processing a direct peripheral interrupt may be understood with reference to FIG. 15.

As shown in FIG. 15, a hardware device that directly communicates with a virtual machine triggers a direct peripheral interrupt, and the interrupt router searches a virtual interrupt table to which vhlimap points, and finds an identifier of a virtual machine to which the interrupt is directly connected, and a virtual interrupt number considered in the virtual machine after the interrupt is directly connected. The interrupt router searches vtblbasex registers, finds a vtblbasex that is of the vtblbasex registers and that has the VM ID, and searches for a virtual interrupt affinity table stored in a memory to which the register points. A vhartid of a vCPU that processes the interrupt is obtained from the interrupt affinity table. The interrupt router searches ifmapx, and finds a sequence number x of a physical processor corresponding to the register having the VM ID and the vhartid, where x is a mhartid of a target physical processor. The interrupt router sends a direct peripheral interrupt to a sending apparatus of the physical processor of the mhartid. The sending apparatus determines a current virtualization state of the CPU. If V=1, the sending apparatus directly sends the direct peripheral interrupt to the virtual machine; or if V=0, the sending apparatus sends the direct peripheral interrupt to the host machine for processing. That is, after the virtual machine goes online, the host machine sends the direct peripheral interrupt to the virtual machine.

According to the foregoing solution provided in this embodiment of this application, a virtual local interrupt is implemented by using a control apparatus, an intermediate apparatus, and a sending apparatus, so that from a local interrupt device to a vCPU do not trap out to a host machine in an entire process. By using the control apparatus, the routing apparatus, and the sending apparatus, a virtual software interrupt is implemented without software cooperation between the virtual machine and the host machine, and from a transmit end vCPU to a receive end vCPU do not trap out to a host machine in an entire process. By using the control apparatus, the routing apparatus, and the sending apparatus, a virtual device interrupt is implemented, and from host machine analog logic to a host vCPU of the receiving end do not switch a context/trap out to a host machine in an entire process. Therefore, the solution provided in this embodiment of this application can accelerate performance of a virtual machine in terms of I/O, a clock, scheduling, and the like. Simulation data indicates that when a virtual local interrupt is processed by using this solution, Redis is improved by 80%, and processing of virtual software interrupts increases by 6%.

The foregoing describes a process of processing a virtual interrupt by using a hardware circuit. The process of processing a virtual interrupt provided in this embodiment of this application may also be implemented by using software. The process implemented by using the software may also be combined in the foregoing chip system. The chip system includes a source physical processor, a control apparatus, an intermediate apparatus, and a sending apparatus. The control apparatus includes a register. The register is configured to receive information used to trigger a virtual interrupt. Functions of the control apparatus, the intermediate apparatus, and the sending apparatus may be implemented in a form of software code. The following provides descriptions with reference to the accompanying drawings.

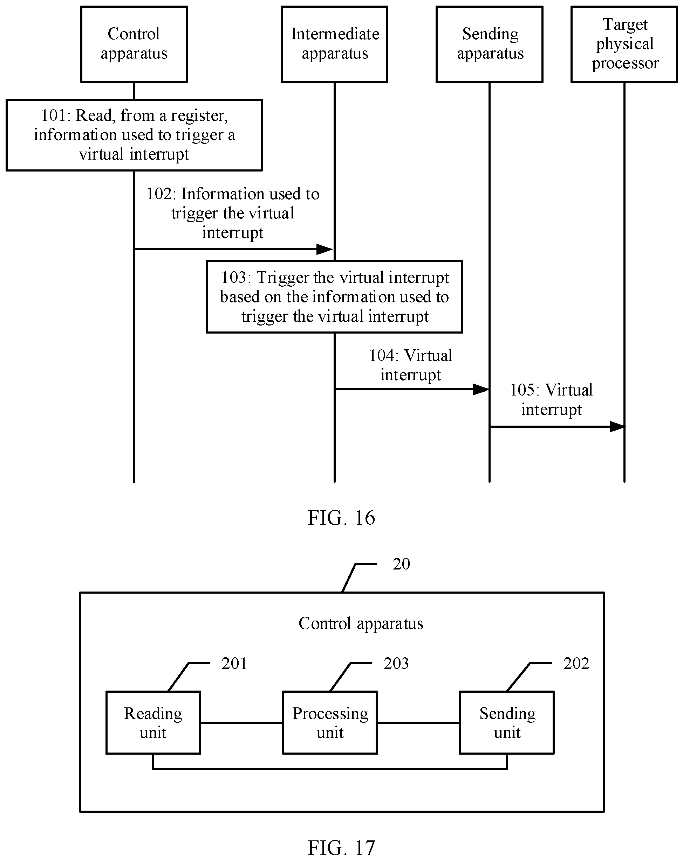

As shown in FIG. 16, an embodiment of a virtual interrupt processing method according to an embodiment of this application includes the following steps.

101: A control apparatus reads, from a register, information used to trigger a virtual interrupt.

The information used to trigger the virtual interrupt comes from a host machine or a virtual machine running on a source physical processor.

102: The control apparatus sends the information used to trigger the virtual interrupt to an intermediate apparatus. Correspondingly, the intermediate apparatus receives the information used to trigger the virtual interrupt.

103: The intermediate apparatus triggers the virtual interrupt based on the information used to trigger the virtual interrupt.

104: The intermediate apparatus sends the virtual interrupt to a sending apparatus. Correspondingly, the sending apparatus receives the virtual interrupt.

105: The sending apparatus sends the virtual device interrupt to a target physical processor.

According to the solution provided in this embodiment of this application, a register dedicated to processing a virtual interrupt is disposed in a control apparatus. In this way, a host machine or a virtual machine in a user mode may directly write information used to trigger a virtual interrupt into the register. The control apparatus may send the information used to trigger the virtual interrupt to an intermediate apparatus, and the intermediate apparatus triggers the virtual interrupt. In addition, the intermediate apparatus sends the virtual interrupt to a sending apparatus, and the sending apparatus sends the virtual interrupt to a target physical processor. In the solution provided in this application, the host machine or the virtual machine may directly access the register, and write the information used to trigger the virtual interrupt into the register, so that the virtual interrupt is sent. Therefore, compared with the conventional technology, in the solution provided in this application, the source physical processor does not need to switch from the virtual machine to the host machine, or the source physical processor does not need to switch from the user mode of the host machine to the kernel mode of the host machine, thereby reducing switching overheads generated during virtual interrupt processing and improving performance of a chip system.

When the virtual interrupt is a virtual local interrupt, the target physical processor and the source physical processor are a same physical processor. The register receives information that is written by the virtual machine and that is used to trigger the virtual local interrupt.

The intermediate apparatus generates the virtual local interrupt based on the information used to trigger the virtual local interrupt.

The sending apparatus sends the virtual local interrupt to a first virtual processor vCPU of the virtual machine, where the first vCPU runs on the source physical processor.

When the virtual interrupt is a virtual software interrupt, the information that is read from the register in step 101 and used to trigger the virtual interrupt includes an identifier of a second vCPU written into the register by the first vCPU of the virtual machine, where the second vCPU is a vCPU of the virtual machine running on the target physical processor.

Before step 102, the control apparatus obtains an identifier of the virtual machine. In this case, step 103 specifically includes sending the identifier of the virtual machine and the identifier of the second vCPU to the intermediate apparatus.

Step 103 specifically includes: The intermediate apparatus determines, from a first correspondence based on the identifier of the virtual machine and the identifier of the second vCPU, a target physical processor corresponding to the identifier of the virtual machine and the identifier of the second vCPU, where the first correspondence is used to record a correspondence between the target physical processor, the second vCPU running on the target processor, and the virtual machine; and triggers the virtual software interrupt.

Step 104 includes: The intermediate apparatus sends the virtual software interrupt to a sending apparatus corresponding to the target physical processor.

Step 105 includes: The sending apparatus sends the virtual software interrupt to the second vCPU running on the target physical processor.

When the virtual interrupt is a virtual device interrupt, the information that is read from the register in step 101 and used to trigger the virtual interrupt includes a target interrupt number written by the host machine into the register and an identifier of the virtual machine, where the target interrupt number is an identifier of an interrupt triggered when the host machine simulates a hardware device.

Step 102 includes: The control apparatus sends the identifier of the virtual machine and the target interrupt number to the intermediate apparatus.

Step 103 includes: The intermediate apparatus searches, based on the identifier of the virtual machine and the target interrupt number, a second correspondence for an identifier of a first vCPU of a virtual machine corresponding to the identifier of the virtual machine and the target interrupt number, where the second correspondence is used to record a correspondence between the virtual machine, the target interrupt number, and the first vCPU; determines, from a third correspondence based on the identifier of the virtual machine and the identifier of the first vCPU, a target physical processor corresponding to the identifier of the virtual machine and the identifier of the first vCPU, where the third correspondence is used to record a correspondence between the target physical processor, the first vCPU that runs on the target processor, and the virtual machine; and generates a virtual device interrupt.

Step 104 includes: The intermediate apparatus sends the virtual device interrupt to a sending apparatus corresponding to the target physical processor.

Step 105 includes: The sending apparatus sends the virtual device interrupt to the first vCPU running on the target physical processor.

Functions of the control apparatus, the intermediate apparatus, and the sending apparatus that are implemented by using software may be understood with reference to corresponding content in the embodiments corresponding to FIG. 2 to FIG. 15, and details are not described herein again.

The foregoing describes a method for processing a virtual interrupt implemented by using software. The following describes an apparatus for implementing the foregoing method for processing a virtual interrupt with reference to accompanying drawings.

As shown in FIG. 17, an embodiment of a control apparatus 20 provided in this embodiment of this application includes: The control apparatus 20 is applied to a chip system, and the chip system further includes a source physical processor, an intermediate apparatus, a sending apparatus, and a target physical processor. The source physical processor is configured to run a host machine or a virtual machine. The control apparatus includes a register, the register is configured to receive information used to trigger a virtual interrupt, and the information used to trigger the virtual interrupt comes from the host machine or the virtual machine. The control apparatus 20 includes:
a reading unit 201, configured to read, from the register, the information used to trigger the virtual interrupt; and
a sending unit 202, configured to send the information that is read by the reading unit 201 and used to trigger the virtual interrupt to the intermediate apparatus, where the information used to trigger the virtual interrupt is used by the intermediate apparatus to trigger the virtual interrupt, and the virtual interrupt is sent to the target physical processor by the sending apparatus.

Optionally, the virtual interrupt is a virtual local interrupt, the target physical processor and the source physical processor are a same physical processor, and the register is configured to receive information that is written by the virtual machine and that is used to trigger the virtual local interrupt. The information used to trigger the virtual local interrupt is used to enable the intermediate apparatus to trigger the virtual local interrupt, the virtual local interrupt is sent by the sending apparatus to a first virtual processor vCPU of the virtual machine, and the first vCPU runs on the source physical processor.

Optionally, the virtual interrupt is a virtual software interrupt. The information used to trigger the virtual interrupt includes an identifier of a second vCPU written by a first vCPU of the virtual machine, where the second vCPU is a vCPU of a virtual machine running on the target physical processor. The control apparatus 20 further includes a processing unit 203.

The processing unit 203 is configured to obtain an identifier of the virtual machine.

The sending unit 202 is configured to send the identifier of the virtual machine to the intermediate apparatus, where the identifier of the virtual machine and the identifier of the second vCPU are used by the intermediate apparatus to determine the target physical processor and trigger the virtual software interrupt, and the virtual software interrupt is sent by the sending apparatus to the second vCPU of the target physical processor.

Optionally, the virtual interrupt is a virtual device interrupt. The information used to trigger the virtual interrupt includes a target interrupt number written by the host machine into the register and an identifier of the virtual machine, and the target interrupt number is an identifier of an interrupt triggered when the host machine simulates a hardware device. The identifier of the virtual machine and the target interrupt number are used by the intermediate apparatus to determine the target physical processor and trigger the virtual device interrupt, and the virtual device interrupt is sent by the sending apparatus to the first vCPU of the target physical processor.

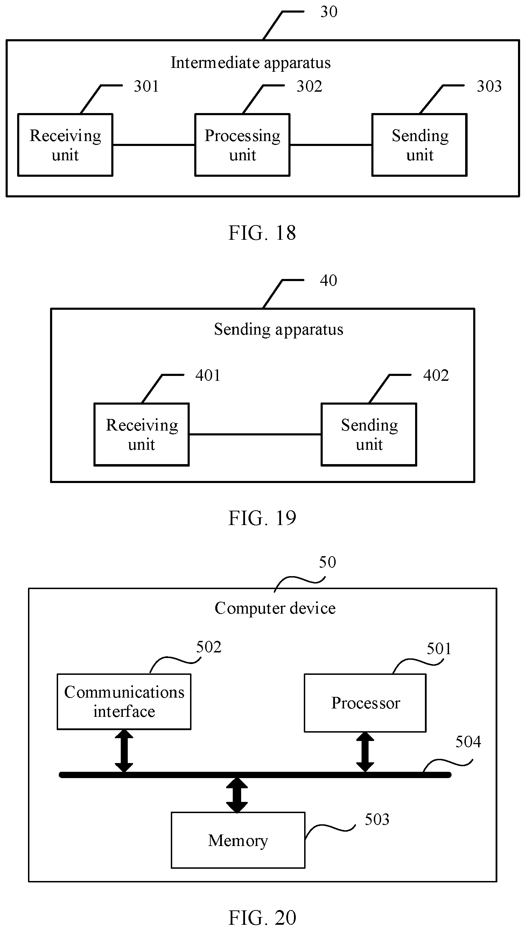

As shown in FIG. 18, an embodiment of an intermediate apparatus 30 according to an embodiment of this application includes: The intermediate apparatus 30 is applied to a chip system, the chip system further includes a source physical processor, a control apparatus, a sending apparatus, and a target physical processor. The source physical processor is configured to run a host machine or a virtual machine. The control apparatus includes a register, where the register is configured to receive information used to trigger a virtual interrupt, and the information used to trigger the virtual interrupt comes from the host machine or the virtual machine. The intermediate apparatus 30 includes:
a receiving unit 301, configured to receive the information that is from the control apparatus and that is used to trigger the virtual interrupt;
a processing unit 302, configured to trigger the virtual interrupt based on the information used to trigger the virtual interrupt; and
a sending unit 303, configured to sending the virtual interrupt to the sending apparatus, where the virtual interrupt is sent by the sending apparatus to the target physical processor.

Optionally, the virtual interrupt is a virtual local interrupt, the target physical processor and the source physical processor are a same physical processor, and the register is configured to receive information that is written by the virtual machine and that is used to trigger the virtual local interrupt. The information used to trigger the virtual local interrupt is used to trigger the virtual local interrupt, the virtual local interrupt is sent by the sending apparatus to a first virtual processor vCPU of the virtual machine, and the first vCPU runs on the source physical processor.

Optionally, the virtual interrupt is a virtual software interrupt. The information used to trigger the virtual interrupt includes an identifier of a second vCPU written by a first vCPU of the virtual machine, where the second vCPU is a vCPU of a virtual machine running on the target physical processor.

The processing unit 302 is configured to: determine, from a first correspondence based on an identifier of the virtual machine and an identifier of the second vCPU, a target physical processor corresponding to the identifier of the virtual machine and the identifier of the second vCPU, where the first correspondence is used to record a correspondence between the target physical processor, the second vCPU running on the target physical processor, and the virtual machine; and trigger a virtual software interrupt, where the virtual software interrupt is sent by the sending apparatus to the second vCPU of the target physical processor.

Optionally, the virtual interrupt is a virtual device interrupt, the information used to trigger the virtual interrupt includes a target interrupt number written by the host machine into the register and an identifier of the virtual machine, where the target interrupt number is an identifier of an interrupt triggered when the host machine simulates a hardware device.

The processing unit 302 is configured to: based on the identifier of the virtual machine and the target interrupt number, search a second correspondence for an identifier of a first vCPU of a virtual machine corresponding to the identifier of the virtual machine and the target interrupt number, where the second correspondence is used to record a correspondence between the virtual machine, the target interrupt number, and the first vCPU; determine, from a third correspondence based on the identifier of the virtual machine and the identifier of the first vCPU, a target physical processor corresponding to the identifier of the virtual machine and the identifier of the first vCPU, where the third correspondence is used to record a correspondence between the target physical processor, the first vCPU that runs on the target processor, and the virtual machine; and trigger a virtual device interrupt, where the virtual device interrupt is sent by the sending apparatus to the first vCPU of the target physical processor.

Optionally, the processing unit 302 is further configured to find an address register based on the identifier of the virtual machine, and obtain the second correspondence from a memory based on an address in the address register, where the address register is configured to store an address of the second correspondence in the memory and the identifier of the virtual machine.

As shown in FIG. 19, an embodiment of a sending apparatus 40 according to an embodiment of this application includes: The sending apparatus 40 is applied to a chip system, the chip system further includes a source physical processor, an intermediate apparatus, a control apparatus, and a target physical processor. The source physical processor is configured to run a host machine or a virtual machine. The control apparatus includes a register, where the register is configured to receive information used to trigger a virtual interrupt, and the information used to trigger the virtual interrupt comes from the host machine or the virtual machine. The sending apparatus 40 includes:
a receiving unit 401, configured to receive a virtual interrupt from the intermediate apparatus; and
a sending unit 402, configured to send the virtual interrupt to the target physical processor.

Optionally, the virtual interrupt is a virtual local interrupt, the target physical processor and the source physical processor are a same physical processor. The sending unit 402 is configured to send the virtual local interrupt to a first virtual processor vCPU of the virtual machine, where the first vCPU runs on the source physical processor.

Optionally, the virtual interrupt is a virtual software interrupt. The information used to trigger the virtual interrupt includes an identifier of a second vCPU written by a first vCPU of the virtual machine, where the second vCPU is a vCPU of a virtual machine running on the target physical processor.

The sending unit 402 is configured to: send the virtual software interrupt to the second vCPU running on the target physical processor

Optionally, the virtual interrupt is a virtual device interrupt, the information used to trigger the virtual interrupt includes a target interrupt number written by the host machine into the register and an identifier of the virtual machine, where the target interrupt number is an identifier of an interrupt triggered when the host machine simulates a hardware device.

The sending unit 402 is configured to: send the virtual device interrupt to a first vCPU running on the target physical processor

Optionally, the sending unit 402 is configured to write the virtual interrupt into a pending register of the target physical processor, where the pending register is configured to receive a command of a procedure executed by the target physical processor

For the solutions described in FIG. 17 to FIG. 19, refer to corresponding content in the embodiments corresponding to FIG. 2 to FIG. 15 for understanding. Details are not described herein again.

FIG. 20 is a schematic diagram of a possible logical structure of a computer device 50 according to an embodiment of this application. The computer device 50 may include the control apparatus, the intermediate apparatus, or the sending apparatus described in FIG. 17 to FIG. 19. The computer device 50 includes a processor 501, a communications interface 502, a memory 503, and a bus 504. The processor 501, the communications interface 502, and the memory 503 are connected to each other through the bus 504. In this embodiment of this application, the processor 501 is configured to control and manage an action of the computer device 50. For example, the processor 501 is configured to perform step 101 or 103 in the method embodiment in FIG. 16. The memory 503 is configured to store program code and data that are of the computer device 50. The communications interface 502 may be configured to perform step 102, 104, or 105 in the method embodiment in FIG. 16.

In addition, the processor 501 may be a central processing unit, a general-purpose processor, a digital signal processor, an application-specific integrated circuit, a field programmable gate array, another programmable logic device, a transistor logic device, a hardware component, or any combination thereof. The processor may implement or execute various example logical blocks, modules, and circuits described with reference to content disclosed in this application. Alternatively, the processor 501 may be a combination of processors implementing a computing function, for example, a combination of one or more microprocessors, or a combination of a digital signal processor and a microprocessor. The bus 504 may be a peripheral component interconnect standard (Peripheral Component Interconnect, PCI) bus, an extended industry standard architecture (Extended Industry Standard Architecture, EISA) bus, or the like. Buses may be classified into an address bus, a data bus, a control bus, and the like. For ease of representation, only one thick line is for representing the bus in FIG. 20, but this does not mean that there is only one bus or only one type of bus.

In another embodiment of this application, a computer-readable storage medium is further provided. The computer-readable storage medium stores computer-executable instructions. When a processor of a device executes the computer-executable instructions, the device performs the virtual interrupt processing method performed by the control apparatus, the intermediate apparatus, or the sending apparatus in FIG. 16.

In another embodiment of this application, a computer program product is further provided. The computer program product includes computer-executable instructions, and the computer-executable instructions are stored in a computer-readable storage medium. When a processor of a device executes the computer-executable instructions, the device performs the virtual interrupt processing method performed by the control apparatus, the intermediate apparatus, or the sending apparatus in FIG. 16.

Another embodiment of this application further provides a chip system. The chip system includes a source physical processor, a control apparatus, a sending apparatus, and a target physical processor. The control apparatus is the control apparatus described in the embodiments of FIG. 2 to FIG. 15, and the sending apparatus is the sending apparatus described in the embodiments of FIG. 2 to FIG. 15.

In a possible embodiment, the chip system may further include the intermediate apparatus described in the embodiments of FIG. 2 to FIG. 15.

In a possible embodiment, the chip system is a processor, the source physical processor and the target physical processor are physical cores in the processor, the control apparatus is located in the processor and is a component coupled to the source physical processor, and the sending apparatus is a component located in the processor and is coupled to the target physical processor. It may be understood that any physical core of the processor may be used as a receiver of the virtual interrupt. Therefore, a physical core may be used as a source physical processor and also a target physical processor. Correspondingly, that is coupled to the physical core may include both a control apparatus and a sending apparatus.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communications connections may be implemented through some interfaces. The indirect couplings or communications connections between the apparatuses or units may be implemented in electrical, mechanical, or another form.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device, or the like) to perform all or some of the steps of the methods described in embodiments of this application. The foregoing storage medium includes any medium that can store program code, such as a USB flash drive, a removable hard disk drive, a read-only memory (Read-Only Memory, ROM), a random access memory (Random Access Memory, RAM), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A chip system, comprising: a source physical processor, a control apparatus, an intermediate apparatus, a sending apparatus, and a target physical processor, wherein the source physical processor is configured to run a host machine or a virtual machine, the control apparatus comprises a register, the register is configured to receive information used to trigger a virtual interrupt, and the information used to trigger the virtual interrupt comes from the host machine or the virtual machine;
the control apparatus is configured to send the information that is in the register and used to trigger the virtual interrupt to the intermediate apparatus;
the intermediate apparatus is configured to: trigger the virtual interrupt based on the information used to trigger the virtual interrupt, and send the virtual interrupt to the sending apparatus; and
the sending apparatus is configured to: receive the virtual interrupt from the intermediate apparatus, and send the virtual interrupt to the target physical processor

2. The chip system according to claim 1, wherein the virtual interrupt is a virtual local interrupt, and the target physical processor and the source physical processor are a same physical processor;
the register is configured to receive information that is written by the virtual machine and that is used to trigger the virtual local interrupt; and
the sending apparatus is configured to send the virtual local interrupt to a first virtual processor of the virtual machine, wherein the first virtual processor runs on the source physical processor

3. The chip system according to claim 1, wherein the virtual interrupt is a virtual software interrupt, the information used to trigger the virtual interrupt comprises an identifier of a second virtual processor written by a first virtual processor of the virtual machine into the register, and the second virtual processor is a virtual processor that is of the virtual machine and that runs on the target physical processor;
the control apparatus is configured to: read the identifier of the second virtual processor from the register, and obtain an identifier of the virtual machine; and send the identifier of the virtual machine and the identifier of the second virtual processor to the intermediate apparatus;
the intermediate apparatus is configured to:
determine, from a first correspondence based on the identifier of the virtual machine and the identifier of the second virtual processor, the target physical processor corresponding to the identifier of the virtual machine and the identifier of the second virtual processor, wherein the first correspondence is used to record a correspondence between the target physical processor, the second virtual processor running on the target processor, and the virtual machine; and
send the virtual software interrupt to the sending apparatus corresponding to the target physical processor; and
the sending apparatus is configured to send the virtual software interrupt to the second virtual processor running on the target physical processor

4. The chip system according to claim 1, wherein the virtual interrupt is a virtual device interrupt, the information used to trigger the virtual interrupt comprises a target interrupt number written by the host machine into the register and an identifier of the virtual machine, and the target interrupt number is an identifier of an interrupt triggered when the host machine simulates a hardware device;
the control apparatus is configured to read the target interrupt number and the identifier of the virtual machine from the register, and send the identifier of the virtual machine and the target interrupt number to the intermediate apparatus;
the intermediate apparatus is configured to:
search, based on the identifier of the virtual machine and the target interrupt number, a second correspondence for an identifier of a first virtual processor that is of the virtual machine and that corresponds to the identifier of the virtual machine and the target interrupt number, wherein the second correspondence is used to record a correspondence between the virtual machine, the target interrupt number, and the first virtual processor;
determine, from a third correspondence based on the identifier of the virtual machine and the identifier of the first virtual processor, the target physical processor corresponding to the identifier of the virtual machine and the identifier of the first virtual processor, wherein the third correspondence is used to record a correspondence between the target physical processor, the first virtual processor running on the target processor, and the virtual machine; and
send the virtual device interrupt to the sending apparatus corresponding to the target physical processor; and
the sending apparatus is configured to send the virtual device interrupt to the first virtual processor running on the target physical processor.

5. The chip system according to claim 4, wherein the intermediate apparatus comprises an address register, and the address register is configured to store an address of the second correspondence in a memory and the identifier of the virtual machine; and
the intermediate apparatus is further configured to: find the address register based on the identifier of the virtual machine, and obtain the second correspondence from the memory based on the address in the address register.

6. A control apparatus, wherein the control apparatus is used in a chip system, the chip system further comprises a source physical processor, an intermediate apparatus, a sending apparatus, and a target physical processor, the source physical processor is configured to run a host machine or a virtual machine, the control apparatus comprises a register, the register is configured to receive information used to trigger a virtual interrupt, and the information used to trigger the virtual interrupt comes from the host machine or the virtual machine; and
the control apparatus is configured to: read the information used to trigger the virtual interrupt from the register, and send the information used to trigger the virtual interrupt to the intermediate apparatus, wherein the information used to trigger the virtual interrupt is used to enable the intermediate apparatus to trigger the virtual interrupt, and the virtual interrupt is sent by the sending apparatus to the target physical processor.

7. The control apparatus according to claim 6, wherein the virtual interrupt is a virtual local interrupt, the target physical processor and the source physical processor are a same physical processor, and the register is configured to receive information that is written by the virtual machine and that is used to trigger the virtual local interrupt; and
the control apparatus is configured to send the information used to trigger the virtual local interrupt to the intermediate apparatus, wherein the information used to trigger the virtual local interrupt is used to enable the intermediate apparatus to trigger the virtual local interrupt, the virtual local interrupt is sent by the sending apparatus to a first virtual processor of the virtual machine, and the first virtual processor runs on the source physical processor

8. The control apparatus according to claim 6, wherein the virtual interrupt is a virtual software interrupt, the information used to trigger the virtual interrupt comprises an identifier of a second virtual processor written by a first virtual processor of the virtual machine into the register, and the second virtual processor is a virtual processor that is of the virtual machine and that runs on the target physical processor; and
the control apparatus is configured to: read the identifier of the second virtual processor from the register, and obtain an identifier of the virtual machine; and send the identifier of the virtual machine and the identifier of the second virtual processor to the intermediate apparatus, wherein the identifier of the virtual machine and the identifier of the second virtual processor are used by the intermediate apparatus to determine the target physical processor and trigger the virtual software interrupt, and the virtual software interrupt is sent by the sending apparatus to the second virtual processor of the target physical processor.

9. The control apparatus according to claim 6, wherein the virtual interrupt is a virtual device interrupt, the information used to trigger the virtual interrupt comprises a target interrupt number written by the host machine into the register and an identifier of the virtual machine, and the target interrupt number is an identifier of an interrupt triggered when the host machine simulates a hardware device; and
the control apparatus is configured to: read the target interrupt number and the identifier of the virtual machine from the register, and send the identifier of the virtual machine and the target interrupt number to the intermediate apparatus, wherein the identifier of the virtual machine and the target interrupt number are used by the intermediate apparatus to determine the target physical processor and trigger the virtual device interrupt, and the virtual device interrupt is sent by the sending apparatus to a first virtual processor of the virtual machine of the target physical processor

10. An intermediate apparatus, wherein the intermediate apparatus is used in a chip system, the chip system further comprises a source physical processor, a control apparatus, a sending apparatus, and a target physical processor, the source physical processor is configured to run a host machine or a virtual machine, the control apparatus comprises a register, the register is configured to receive information used to trigger a virtual interrupt, and the information used to trigger the virtual interrupt comes from the host machine or the virtual machine; and
the intermediate apparatus is configured to: receive, from the control apparatus, the information used to trigger the virtual interrupt, trigger the virtual interrupt based on the information used to trigger the virtual interrupt, and send the virtual interrupt to the sending apparatus, wherein the virtual interrupt is sent by the sending apparatus to the target physical processor

11. The intermediate apparatus according to claim 10, wherein the virtual interrupt is a virtual local interrupt, the target physical processor and the source physical processor are a same physical processor, and the register is configured to receive information that is written by the virtual machine and that is used to trigger the virtual local interrupt; and
the intermediate apparatus is configured to: trigger the virtual local interrupt based on the information used to trigger the virtual local interrupt, and send the virtual local interrupt to the sending apparatus, wherein the virtual local interrupt is sent by the sending apparatus to a first virtual processor of the virtual machine, and the first virtual processor runs on the source physical processor

12. The intermediate apparatus according to claim 10, wherein the virtual interrupt is a virtual software interrupt, the information used to trigger the virtual interrupt comprises an identifier of a second virtual processor written by a first virtual processor of the virtual machine into the register, and the second virtual processor is a virtual processor that is of the virtual machine and that runs on the target physical processor; and
the intermediate apparatus is configured to:
receive an identifier of the virtual machine and the identifier of the second virtual processor from the control apparatus;
determine, from a first correspondence based on the identifier of the virtual machine and the identifier of the second virtual processor, the target physical processor corresponding to the identifier of the virtual machine and the identifier of the second virtual processor, wherein the first correspondence is used to record a correspondence between the target physical processor, the second virtual processor running on the target processor, and the virtual machine;
trigger the virtual software interrupt; and
send the virtual software interrupt to the sending apparatus corresponding to the target physical processor, wherein the virtual software interrupt is sent by the sending apparatus to the second virtual processor of the target physical processor

13. The intermediate apparatus according to claim 10, wherein the virtual interrupt is a virtual device interrupt, the information used to trigger the virtual interrupt comprises a target interrupt number written by the host machine into the register and an identifier of the virtual machine, and the target interrupt number is an identifier of an interrupt triggered when the host machine simulates a hardware device; and
the intermediate apparatus is configured to:
receive the identifier of the virtual machine and the target interrupt number from the control device;
search, based on the identifier of the virtual machine and the target interrupt number, a second correspondence for an identifier of a first virtual processor that is of the virtual machine and that corresponds to the identifier of the virtual machine and the target interrupt number, wherein the second correspondence is used to record a correspondence between the virtual machine, the target interrupt number, and the first virtual processor;
determine, from a third correspondence based on the identifier of the virtual machine and the identifier of the first virtual processor, the target physical processor corresponding to the identifier of the virtual machine and the identifier of the first virtual processor, wherein the third correspondence is used to record a correspondence between the target physical processor, the first virtual processor running on the target processor, and the virtual machine;
trigger the virtual device interrupt; and
send the virtual device interrupt to the sending apparatus corresponding to the target physical processor, wherein the virtual device interrupt is sent by the sending apparatus to the first virtual processor of the target physical processor.

14. The intermediate apparatus according to claim 13, wherein the intermediate apparatus comprises an address register, and the address register is configured to store an address of the second correspondence in a memory and the identifier of the virtual machine; and
the intermediate apparatus is further configured to: find the address register based on the identifier of the virtual machine, and obtain the second correspondence from the memory based on the address in the address register.

15. A sending apparatus, wherein the sending apparatus is used in a chip system, the chip system further comprises a source physical processor, an intermediate apparatus, a control apparatus, and a target physical processor, the source physical processor is configured to run a host machine or a virtual machine, the control apparatus comprises a register, the register is configured to receive information used to trigger a virtual interrupt, and the information used to trigger the virtual interrupt comes from the host machine or the virtual machine; and
the sending apparatus is configured to: receive the virtual interrupt from the intermediate apparatus, and send the virtual interrupt to the target physical processor

16. The sending apparatus according to claim 15, wherein the virtual interrupt is a virtual local interrupt, and the target physical processor and the source physical processor are a same physical processor; and
the sending apparatus is configured to: receive the virtual local interrupt from the intermediate apparatus, and send the virtual local interrupt to a first virtual processor of the virtual machine, wherein the first virtual processor runs on the source physical processor.

17. The sending apparatus according to claim 15, wherein the virtual interrupt is a virtual software interrupt, the information used to trigger the virtual interrupt comprises an identifier of a second virtual processor written by a first virtual processor of the virtual machine into the register, and the second virtual processor is a virtual processor that is of the virtual machine and that runs on the target physical processor; and
the sending apparatus is configured to: receive the virtual software interrupt from the intermediate apparatus, and send the virtual software interrupt to the second virtual processor running on the target physical processor

18. The sending apparatus according to claim 15, wherein the virtual interrupt is a virtual device interrupt, the information used to trigger the virtual interrupt comprises a target interrupt number written by the host machine into the register and an identifier of the virtual machine, and the target interrupt number is an identifier of an interrupt triggered when the host machine simulates a hardware device; and
the sending apparatus is configured to: receive the virtual device interrupt from the intermediate apparatus, and send the virtual device interrupt to a first virtual processor running on the target physical processor

19. The sending apparatus according to any one of claims 15 to 18, wherein
the sending apparatus is configured to: write the virtual interrupt into a pending register of the target physical processor, wherein the pending register is configured to receive a command of a procedure executed by the target physical processor

20. A virtual interrupt processing method, wherein the method is applied to a control apparatus in a chip system, the chip system further comprises a source physical processor, an intermediate apparatus, a sending apparatus, and a target physical processor, the source physical processor is configured to run a host machine or a virtual machine, the control apparatus comprises a register, the register is configured to receive information used to trigger a virtual interrupt, the information used to trigger the virtual interrupt comes from the host machine or the virtual machine, and the method comprises:
reading, from the register, the information used to trigger the virtual interrupt; and
sending the information used to trigger the virtual interrupt to the intermediate apparatus, wherein the information used to trigger the virtual interrupt is used to enable the intermediate apparatus to trigger the virtual interrupt, and the virtual interrupt is sent by the sending apparatus to the target physical processor.

21. The method according to claim 20, wherein the virtual interrupt is a virtual local interrupt, the target physical processor and the source physical processor are a same physical processor, and the register is configured to receive information that is written by the virtual machine and that is used to trigger the virtual local interrupt; and
the information used to trigger the virtual local interrupt is used by the intermediate apparatus to trigger the virtual local interrupt, the virtual local interrupt is sent by the sending apparatus to a first virtual processor of the virtual machine, and the first virtual processor runs on the source physical processor

22. The method according to claim 20, wherein the virtual interrupt is a virtual software interrupt, the information used to trigger the virtual interrupt comprises an identifier of a second virtual processor written by a first virtual processor of the virtual machine into the register, the second virtual processor is a virtual processor that is of the virtual machine and that runs on the target physical processor, and the method further comprises:
obtaining an identifier of the virtual machine; and
sending the identifier of the virtual machine to the intermediate apparatus, wherein the identifier of the virtual machine and the identifier of the second virtual processor are used by the intermediate apparatus to determine the target physical processor and trigger the virtual software interrupt, and the virtual software interrupt is sent by the sending apparatus to the second virtual processor of the target physical processor.

23. The method according to claim 20, wherein the virtual interrupt is a virtual device interrupt, the information used to trigger the virtual interrupt comprises a target interrupt number written by the host machine into the register and an identifier of the virtual machine, the target interrupt number is an identifier of an interrupt triggered when the host machine simulates a hardware device, the identifier of the virtual machine and the target interrupt number are used by the intermediate apparatus to determine the target physical processor and trigger the virtual device interrupt, and the virtual device interrupt is sent by the sending apparatus to a first virtual processor of the target physical processor

24. A virtual interrupt processing method, wherein the method is applied to an intermediate apparatus in a chip system, the chip system further comprises a source physical processor, a control apparatus, a sending apparatus, and a target physical processor, the source physical processor is configured to run a host machine or a virtual machine, the control apparatus comprises a register, the register is configured to receive information used to trigger a virtual interrupt, the information used to trigger the virtual interrupt comes from the host machine or the virtual machine, and the method comprises:
receiving, from the control apparatus, the information used to trigger the virtual interrupt;
triggering the virtual interrupt based on the information used to trigger the virtual interrupt; and
sending the virtual interrupt to the sending apparatus, wherein the virtual interrupt is sent by the sending apparatus to the target physical processor

25. The method according to claim 24, wherein the virtual interrupt is a virtual local interrupt, the target physical processor and the source physical processor are a same physical processor, and the register is configured to receive information that is written by the virtual machine and that is used to trigger the virtual local interrupt; and
the information used to trigger the virtual local interrupt is used to trigger the virtual local interrupt, the virtual local interrupt is sent by the sending apparatus to a first virtual processor of the virtual machine, and the first virtual processor runs on the source physical processor

26. The method according to claim 24, wherein the virtual interrupt is a virtual software interrupt, the information used to trigger the virtual interrupt comprises an identifier of a second virtual processor written by a first virtual processor of the virtual machine into the register, and the second virtual processor is a virtual processor that is of the virtual machine and that runs on the target physical processor; and
the triggering the virtual interrupt based on the information used to trigger the virtual interrupt comprises:
determining, from a first correspondence based on the identifier of the virtual machine and the identifier of the second virtual processor, the target physical processor corresponding to the identifier of the virtual machine and the identifier of the second virtual processor, wherein the first correspondence is used to record a correspondence between the target physical processor, the second virtual processor running on the target processor, and the virtual machine; and
triggering the virtual software interrupt, wherein the virtual software interrupt is sent by the sending apparatus to the second virtual processor of the target physical processor

27. The method according to claim 24, wherein the virtual interrupt is a virtual device interrupt, the information used to trigger the virtual interrupt comprises a target interrupt number written by the host machine into the register and an identifier of the virtual machine, and the target interrupt number is an identifier of an interrupt triggered when the host machine simulates a hardware device; and
the triggering the virtual interrupt based on the information used to trigger the virtual interrupt comprises:
searching, based on the identifier of the virtual machine and the target interrupt number, a second correspondence for an identifier of a first virtual processor that is of the virtual machine and that corresponds to the identifier of the virtual machine and the target interrupt number, wherein the second correspondence is used to record a correspondence between the virtual machine, the target interrupt number, and the first virtual processor;
determining, from a third correspondence based on the identifier of the virtual machine and the identifier of the first virtual processor, the target physical processor corresponding to the identifier of the virtual machine and the identifier of the first virtual processor, wherein the third correspondence is used to record a correspondence between the target physical processor, the first virtual processor running on the target processor, and the virtual machine; and
triggering the virtual device interrupt, wherein the virtual device interrupt is sent by the sending apparatus to the first virtual processor of the target physical processor

28. The method according to claim 27, wherein the method further comprises:
finding an address register based on the identifier of the virtual machine, and obtaining the second correspondence from a memory based on an address in the address register, wherein the address register is configured to store the address of the second correspondence in the memory and the identifier of the virtual machine.

29. A virtual interrupt processing method, wherein the method is applied to a sending apparatus in a chip system, the chip system further comprises a source physical processor, an intermediate apparatus, a control apparatus, and a target physical processor, the source physical processor is configured to run a host machine or a virtual machine, the control apparatus comprises a register, the register is configured to receive information used to trigger a virtual interrupt, the information used to trigger the virtual interrupt comes from the host machine or the virtual machine, and the method comprises:
receiving the virtual interrupt from the intermediate apparatus; and
sending the virtual interrupt to the target physical processor

30. The method according to claim 29, wherein the virtual interrupt is a virtual local interrupt, and the target physical processor and the source physical processor are a same physical processor; and
the sending the virtual interrupt to the target physical processor comprises:
sending the virtual local interrupt to a first virtual processor of the virtual machine, wherein the first virtual processor runs on the source physical processor

31. The method according to claim 29, wherein the virtual interrupt is a virtual software interrupt, the information used to trigger the virtual interrupt comprises an identifier of a second virtual processor written by a first virtual processor of the virtual machine into the register, and the second virtual processor is a virtual processor that is of the virtual machine and that runs on the target physical processor; and
the sending the virtual interrupt to the target physical processor comprises:
sending the virtual software interrupt to the second virtual processor running on the target physical processor.

32. The method according to claim 29, wherein the virtual interrupt is a virtual device interrupt, the information used to trigger the virtual interrupt comprises a target interrupt number written by the host machine into the register and an identifier of the virtual machine, and the target interrupt number is an identifier of an interrupt triggered when the host machine simulates a hardware device; and
the sending the virtual interrupt to the target physical processor comprises:
sending the virtual device interrupt to a first virtual processor running on the target physical processor

33. The method according to any one of claims 29 to 32, wherein the method further comprises:
writing the virtual interrupt into a pending register of the target physical processor, wherein the pending register is configured to receive a command of a procedure executed by the target physical processor

34. A chip system, comprising a source physical processor, a control apparatus, a sending apparatus, and a target physical processor, wherein the control apparatus is the control apparatus according to any one of claims 6 to 9, and the sending apparatus is the sending apparatus according to any one of claims 15 to 19.

35. The chip system according to claim 34, wherein the chip system further comprises an intermediate apparatus, and the intermediate apparatus is the intermediate apparatus according to any one of claims 10 to 14.

36. A computer-readable storage medium, wherein the computer-readable storage medium stores a computer program, when the computer program is performed by a processor, the method according to any one of claims 20 to 23 is implemented, or the method according to any one of claims 24 to 28 is implemented, or the method according to any one of claims 29 to 33 is implemented.

37. A computer device, wherein the computer device comprises the chip system according to any one of claims 1 to 5, or comprises the chip system according to claim 34 or 35.
